# EUROPEAN PATENT APPLICATION

(11) **EP 4 535 007 A1**
(43) Date of publication of application: **09.04.2025**
(21) Application number: 24203460.1
(22) Date of filing: 30.09.2024
(51) Int. Cl.: G01N 35/00

(54) **SAMPLE ANALYZER AND METHOD FOR DETERMINING DIRT ON PLACEMENT PART INCLUDED IN SAMPLE ANALYZER**

(30) Priority: 02.10.2023 JP 2023171244; 02.10.2023 JP 2023171251
(71) Applicant: SYSMEX CORPORATION, Kobe-shi, Hyogo 651-0073 (JP); EIKEN CHEMICAL CO., LTD., Taito-ku Tokyo 110-8408 (JP)
(72) Inventor: SHIMIZU, Masato, Hyogo 651-0073 (JP); TAKEHARA, Hisato, Hyogo 651-0073 (JP); KUSUHARA, Takashi, Tokyo 110-8408 (JP)
(74) Representative: Hoffmann Eitle

(57) **Abstract**

Disclosed is a sample analyzer configured to image a test strip and analyze an image of the test strip, to analyze a sample, the sample analyzer including: a transport part having a placement part on which the test strip is placed, the transport part being configured to move the placement part to an imaging position for the test strip; a controller configured to analyze the image of the test strip obtained through imaging; and an imaging part configured to be able to image the placement part, wherein the controller analyzes an image of the placement part obtained through imaging, to detect dirt on the placement part.

## Description

### CROSS REFERENCE TO RELATED APPLICATIONS

This application claims priority from prior Japanese Patent Applications No. 2023-171251, filed on October 2, 2023, entitled "SAMPLE ANALYZER AND METHOD FOR DETERMINING DIRT ON PLACEMENT PART INCLUDED IN SAMPLE ANALYZER" and No. 2023-171244, filed on October 2, 2023, entitled "SAMPLE ANALYZER AND SAMPLE ANALYSIS METHOD", the entire contents of which are incorporated herein by reference.

### FIELD OF THE INVENTION

The present invention relates to a sample analyzer that performs analysis of components in a sample by using a test strip, and a method for determining dirt on a placement part included in the sample analyzer.

### BACKGROUND OF THE INVENTION

To date, a sample analyzer that analyzes components contained in a sample, on the basis of a reaction caused by bringing a sample such as urine or saliva into contact with a test strip, has been known (e.g., see Japanese Laid-Open Patent Publication No. 2017-72567). As such sample analyzers, there are semiautomatic apparatuses and fully automatic apparatuses. In the case of a semiautomatic apparatus, a measurer immerses a test strip piece in a sample, and places the test strip piece on a placement part of the apparatus. In the case of a fully automatic apparatus, after a test strip piece has been automatically placed on a placement part, a sample is spot-applied to the test strip piece. In each case, an image obtained by capturing the test strip placed on the placement part is analyzed, whereby analysis of components contained in the sample is performed.

### SUMMARY OF THE INVENTION

In each of a semiautomatic sample analyzer and a fully automatic sample analyzer, there are cases where a sample such as urine or saliva attaches to the placement part to which a test strip is placed. Therefore, cleaning of the placement part is periodically performed. In a sample analyzer, it is an important issue to enable cleaning of the placement part to be effectively and appropriately performed.

A sample analyzer (1, 2) according to the present invention is a sample analyzer (1, 2) configured to image a test strip (100) and analyze an image of the test strip (100), to analyze a sample. The sample analyzer (1, 2) includes: a transport part (10) having a placement part (11) on which the test strip (100) is placed, the transport part (10) being configured to move the placement part (11) to an imaging position (P3) for the test strip (100); a controller (50) configured to analyze the image of the test strip (100) obtained through imaging; and an imaging part (20) configured to be able to image the placement part (11). The controller (50) analyzes an image of the placement part (11) obtained through imaging, to detect dirt on the placement part (11).

According to the above configuration, dirt on the placement part (11) can be automatically detected through analysis of the image of the placement part (11). Therefore, cleaning of the placement part (11) can be effectively and appropriately performed. For example, an operator need not confirm the presence or absence of dirt on the placement part (11), and can perform cleaning of the placement part (11) for which dirt has been detected, on the basis of the detected information.

A method for detecting dirt on a placement part according to the present invention is a method, performed in a sample analyzer (1, 2) including an imaging part (20) and a placement part (11) on which a test strip (100) is placed, for determining dirt on the placement part (11). The method includes: imaging the placement part (11); and analyzing an image, of the placement part (11), obtained through imaging, to detect dirt on the placement part (11).

According to the sample analyzer of the present invention, effective and appropriate cleaning of the placement part can be performed. When a sample attaches to the placement part and dirt is accumulated, influence on the measurement result or a hygiene problem may occur, for example. However, according to the sample analyzer of the present invention, occurrence of such problems can be more reliably inhibited.

### BRIEF DESCRIPTION OF THE DRAWINGS

FIG. 1 shows a schematic configuration of a sample analyzer as an example of an embodiment;
FIG. 2 is a perspective view showing an appearance of the sample analyzer;
FIG. 3 is a perspective view showing an inner structure of the sample analyzer;
FIG. 4 is a side view showing an inner structure of the sample analyzer;
FIG. 5 is a perspective view of a test strip holder;
FIG. 6 is a perspective view showing an example of a test strip;
FIG. 7 is a block diagram showing a configuration of the sample analyzer;
FIG. 8 is a flowchart showing an example of a sample analysis process;
FIGS. 9A and 9B each show an example of a display screen for a sample analysis result;
FIG. 10 shows an example of a measurement screen;
FIGS. 11A to 11E each show an example of a selection screen for a test strip image to be displayed on a screen;
FIGS. 12A to 12C are diagrams for describing an example of a screen of enlarged display of the test strip image;
FIG. 13 is a flowchart showing an example of a display process for the test strip image;
FIGS. 14A to 14C each show an example of an error display screen;
FIG. 15 is an example of a mark indicating an abnormality occurrence location;
FIG. 16 is a flowchart showing an example of an abnormality display process;
FIG. 17 is a diagram for describing a function for detecting dirt on a test strip holder in the sample analyzer as an example of the embodiment;
FIG. 18 is a diagram for describing a function for detecting dirt on the test strip holder in the sample analyzer as an example of the embodiment;
FIGS. 19A to 19D each show an example of a display screen for a cleaning mode for the test strip holder and information regarding dirt on the holder;
FIGS. 20A to 20D each show an example of a determination screen for a cleaning state of the test strip holder;
FIG. 21 is a flowchart showing an example of an automatic detection cleaning process for the test strip holder;
FIG. 22 is a flowchart showing an example of a dirt detection process for the test strip holder; and
FIG. 23 shows a schematic configuration of a sample analyzer as another example of the embodiment.

### DETAILED DESCRIPTION

Hereinafter, embodiments of a sample analyzer and a sample analysis method according to the present disclosure will be described in detail. The embodiments described below are merely some examples, and the present disclosure is not limited to the embodiments below. A form obtained by selectively combining components of a plurality of embodiments and modifications described below are included in the present disclosure.

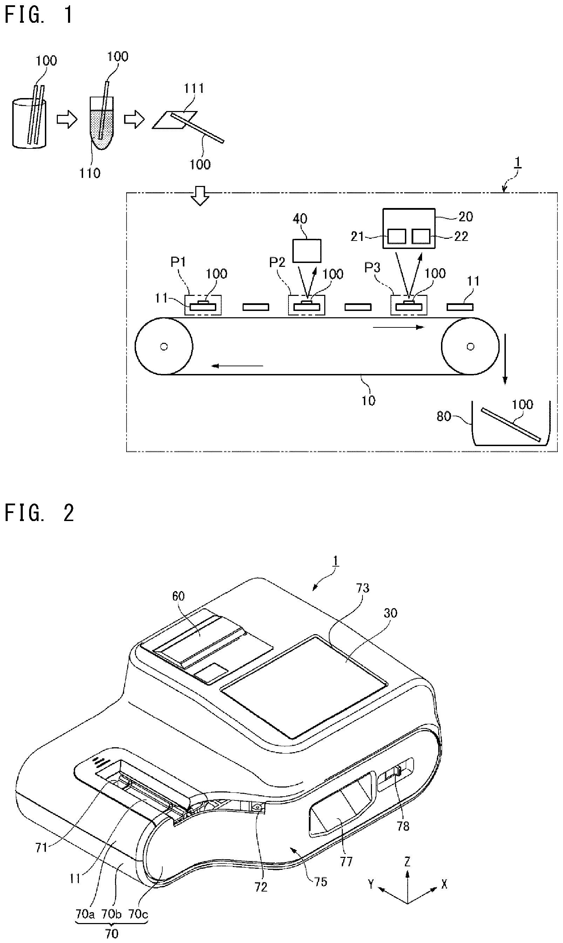

FIG. 1 is a schematic diagram for describing a schematic configuration of a sample analyzer 1 as an example of an embodiment of the present disclosure, and an outline of a sample analysis method. As shown in FIG. 1, the sample analyzer 1 is an apparatus that analyzes a sample 110 by imaging a test strip 100 immersed in the sample 110, and includes a transport part 10 and an imaging part 20. The transport part 10 has a test strip holder 11 as a placement part on which the test strip 100 is placed by an operator. The transport part 10 is provided with a plurality of the test strip holders 11. The transport part 10 moves each test strip holder 11 to transport the test strip 100 to an imaging position P3, and the imaging part 20 images the test strip 100 at the imaging position P3. The imaging part 20 includes a light source 21 and an imaging element 22.

The sample analyzer 1 further includes: a test strip detection part 40 that detects the test strip 100 placed on the test strip holder 11; and a collection part 80 in which test strips 100 having been imaged are collected. In the sample analyzer 1, a placement position P1 at which the operator places a test strip 100 on a test strip holder 11 is determined. A detection position P2 for detection of the test strip 100 by the test strip detection part 40 is set between the placement position P1 and the imaging position P3. In the sample analyzer 1, a test strip 100 is placed on a test strip holder 11 at the placement position P1 and is transported, through the detection position P2, to the imaging position P3. The test strip 100 is imaged at the imaging position P3, and then the test strip 100 is collected in the collection part 80.

The sample 110 analyzed by the sample analyzer 1 is a liquid in which a test strip 100 can be immersed, and is a liquid sample, such as saliva, celomic fluid, or urine, that is collected from a person. In the following description, it is assumed that the sample 110 is urine and the sample analyzer 1 is used in urine examination. It should be noted that the sample 110 encompasses a test specimen and a quality control specimen. In the sample analyzer 1, the operator immerses a test strip 100 in urine as the sample 110, wipes off urine attached to the test strip 100, and then, places the test strip 100 on a test strip holder 11 at the placement position P1. Specifically, the operator wipes off excess urine attached to the test strip 100, with wiping paper 111, and places the test strip 100 with reagent pads 102 oriented upward, onto a test strip holder 11.

The sample analyzer 1 automatically performs a process of transporting the test strip 100 placed on the test strip holder 11, from the placement position P1 to the imaging position P3, imaging the test strip 100, and analyzing the sample 110 on the basis of the image of the test strip 100. The test strip 100 to be placed on the test strip holder 11, i.e., the test strip 100 that has been immersed in urine and from which surplus urine has been wiped off, needs to be prepared by the operator as described above. The sample analyzer 1 is referred to as a semiautomatic apparatus in contrast to a later-described sample analyzer 2 that automatically performs placement of a test strip 100 onto the placement part and spot-application of a sample 110 to the test strip 100.

The test strip detection part 40 detects the test strip 100 placed on the test strip holder 11 at the detection position P2 between the placement position P1 and the imaging position P3. In a normal measurement mode in which a later-described automatic detection cleaning mode is not executed, the imaging part 20 executes an imaging process when a test strip 100 is detected by the test strip detection part 40. The imaging part 20 images the test strip holder 11 such that the entirety of the test strip holder 11 is captured. For the test strip detection part 40, an optical sensor having a light emitter and a light receiver is used, for example.

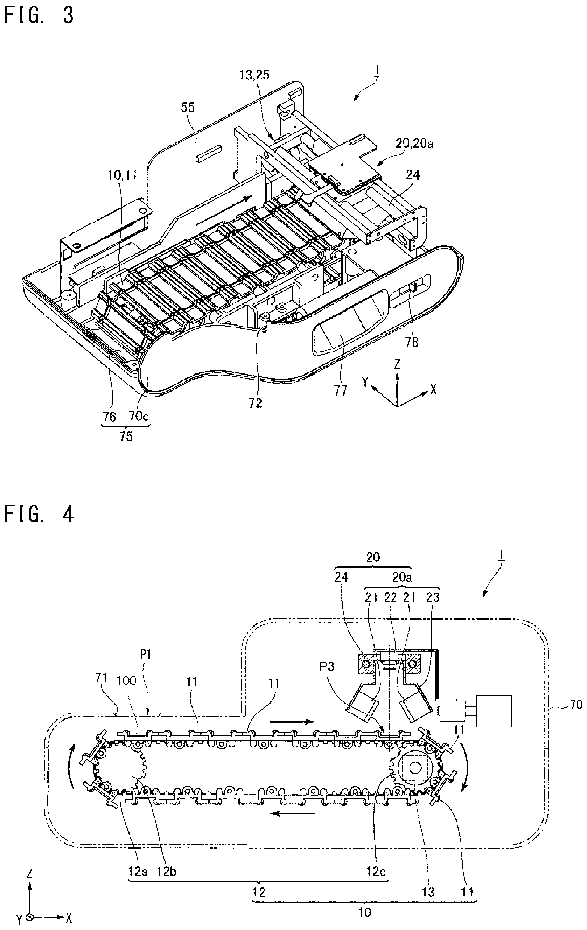

In the following, a structure of the sample analyzer 1 will be described in detail with reference to FIG. 2 to FIG. 4. FIG. 2 shows an appearance of the sample analyzer 1. FIG. 3 and FIG. 4 each show an inner structure of the sample analyzer 1. FIG. 3 shows a state where an upper cover 71a of a housing 70 is removed.

In the following, for convenience of description, terms indicating directions are used. In an XYZ orthogonal coordinate system shown in FIG. 2 to FIG. 4, the X direction is the direction along the transport direction of the test strip 100, the Z direction is the direction along the vertical direction, and the Y direction is the direction orthogonal to the X direction and the Z direction. The X direction may be referred to as a left-right direction, the Y direction may be referred to as a front-rear direction, and the Z direction may be referred to as an up-down direction. The direction in which a later-described drawer part 75 is drawn is defined as the front, and the left and right are defined as the left and right when the sample analyzer 1 is viewed from the front.

As shown in FIG. 2 to FIG. 4, the sample analyzer 1 includes the housing 70 that covers the apparatus inner structure such as the transport part 10 and the imaging part 20. The housing 70 includes an upper cover 70a, a lower cover 70b, and a front cover 70c, and forms the appearance of the sample analyzer 1. In the upper face of the upper cover 70a, an opening 71 for exposing one of the test strip holders 11 forming the transport part 10 is formed. The opening 71 in the upper cover 70a allows the operator to place a test strip 100 on a test strip holder 11 disposed inside the apparatus. The position where the opening 71 is formed is the placement position P1 at which the test strip 100 is placed on the test strip holder 11.

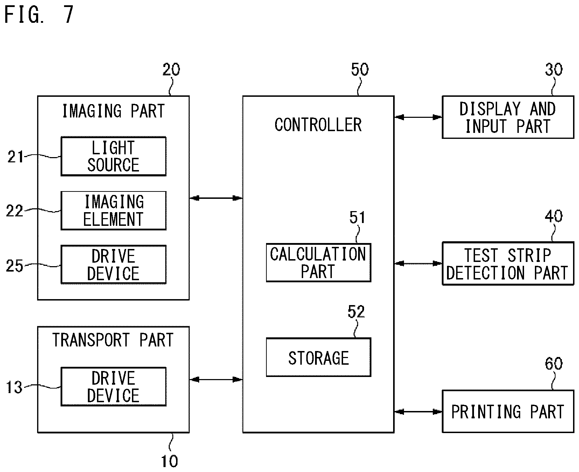

The sample analyzer 1 further includes a display and input part 30. The display and input part 30 functions as a display part configured to display an analysis result and the like of the sample 110, and as an input part configured to receive an input of a predetermined instruction. The display and input part 30 is implemented as a touch panel. A display part and an input part can also be separately provided. In addition, the sample analyzer 1 includes: a board 55 having installed thereon a microcomputer forming a controller 50 (see FIG. 7 described later); and a printing part 60. The printing part 60 is a printer that prints an analysis result of the sample 110.

The sample analyzer 1 has a shape that is longer in the X direction (left-right direction) than in the Y direction (front-rear direction) and the Z direction (up-down direction) and in which a right side portion of the apparatus is one step higher than a left side portion. The imaging part 20, the display and input part 30, and the printing part 60 are disposed in the right side portion of the sample analyzer 1, and the display and input part 30 and the printing part 60 are disposed on the upper face of the sample analyzer 1. The placement position P1 for the test strip 100 is provided in the left side portion of the sample analyzer 1. The board 55 is disposed so as to extend from the right side portion to the left side portion of the sample analyzer 1.

The sample analyzer 1 is a small analyzer that can be disposed on a desk in an examination room, a consultation room, or the like, and that can be easily carried by one person, and is configured to be able to transport a test strip 100 to the imaging position P3 as necessary. Since the transport part 10 has a plurality of test strip holders 11, even during analysis of an image of one test strip 100, another test strip 100 can be placed on a test strip holder 11 at the placement position P1, and the test strip holder 11 having the test strip 100 placed thereon can be transported toward the imaging position P3. The transport part 10 is configured such that the plurality of test strip holders 11 move in circulation in the X direction of the apparatus.

The sample analyzer 1 includes a drawer part 75 including a tray 76 to which the transport part 10 is fixed, and is configured such that the transport part 10 can be drawn to the front. The tray 76 is fixed to the front cover 70c of the housing 70, and is drawn by pulling the front cover 70c forward. The front cover 70c forms the drawer part 75 together with the tray 76. The front cover 70c has formed therein a recess 77 serving as a handle in which a finger can be inserted. At a position adjacent to the recess 77, a lock lever 78 for locking movement of the drawer part 75 is provided. Since the drawer part 75 is provided, the transport part 10 can be drawn from the inside of the apparatus and cleaned.

The transport part 10 has: the plurality of test strip holders 11 on which test strips 100 are placed; a transport mechanism 12 for the test strip holders 11; and a drive device 13. Each test strip holder 11 is a placement part configured such that a test strip 100 is placed by the operator. On each test strip holder 11, one test strip 100 is placed at the placement position P1. As described above, the position of the opening 71 formed in the upper cover 70a serves as the placement position P1. The opening 71 is formed in a size that allows the entirety of one test strip holder 11 to be exposed.

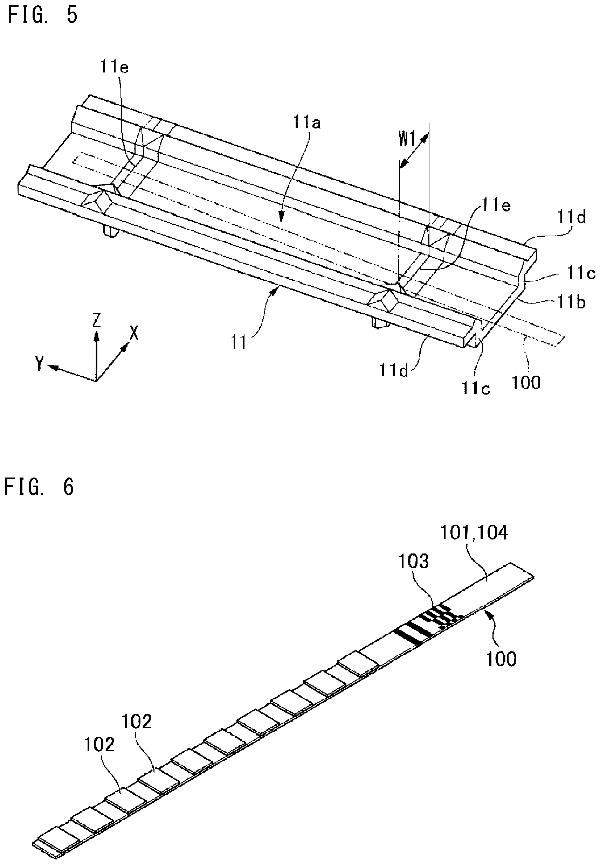

On a test strip holder 11, a test strip 100 is placed in a state where a grip part 104 of the test strip 100 sticks out of the holder (see FIGS. 5, 6 described later). Further, the grip part 104 of the test strip 100 enters a state of protruding from the inside of the housing 70 toward the front of the apparatus. In this case, the operator can operate the grip part 104 from outside the apparatus, which facilitates placing the test strip 100 at an appropriate place of the test strip holder 11. The left side portion of the sample analyzer 1 has a shape recessed rearward with respect to the right side portion, and in an upper end portion of the front cover 70c, a slit-shaped opening 72 for passing the grip part 104 therethrough is formed.

The opening 71 in the upper cover 70a is formed in a slit shape along the front-rear direction (the Y direction) from the front end of the upper cover 70a. The opening 72 in the front cover 70c is formed so as to be continuous with the opening 71, while extending from the placement position P1 over the portion where the apparatus protrudes forward. In this case, even when the grip part 104 of the test strip 100 is in a state of protruding forward from the inside of the apparatus, the test strip 100 can be prevented from coming into contact with the housing 70.

The transport mechanism 12 is a mechanism for transporting the test strip holders 11 and includes an endless belt 12a, a pulley 12b, and a pulley 12c. The endless belt 12a is a belt-like body formed in a ring shape. The endless belt 12a has mounted thereto the plurality of test strip holders 11 in a state of being independent of each other. Test strip holders 11 adjacent to each other are closely disposed with such a gap that prevents contact therebetween. The pulleys 12b, 12c are disposed with an interval therebetween in the X direction such that the rotation axes thereof extend along the Y direction. The pulley 12c is the driving pulley driven by the drive device 13, and the pulley 12b is the driven pulley.

The endless belt 12a spans over the pulleys 12b, 12c, and rotates by the pulley 12c being driven. As a result of rotation of the endless belt 12a, each test strip holder 11 mounted to the endless belt 12a moves in circulation in the X direction, and the test strip 100 placed on the test strip holder 11 is transported from the placement position P1 on the apparatus left side to the imaging position P3 on the apparatus right side. Then, the test strip holder 11 having transported the test strip 100 returns to the placement position P1 again. The collection part 80 (see FIG. 1) is disposed in the vicinity of the pulley 12c. When the test strip holder 11 is inverted at the position of the pulley 12c, the test strip 100 having been imaged falls into the collection part 80 to be collected.

The placement position P1 at which the test strip 100 is placed on the test strip holder 11 and the imaging position P3 at which the test strip 100 is imaged by the imaging part 20 are separated from each other in the X direction as described above. Although details will be described later, each test strip 100 includes a plurality of types of reagent pads 102. When the test strip 100 is moved from the placement position P1 to the imaging position P3, predetermined components in the sample 110 react with reagents contained in the reagent pads 102 of the test strip 100. Therefore, the time in which the test strip 100 is moved from the placement position P1 to the imaging position P3 is set to be a time in which the reaction occurs without excess or deficiency and each reagent pad 102 appropriately exhibits color.

The drive device 13 is a device that drives the pulley 12c to rotate. The drive device 13 is a stepping motor, for example, and intermittently drives the pulley 12c. This allows the test strip holder 11 mounted to the endless belt 12a to intermittently move from the placement position P1 toward the imaging position P3, and allows the test strip holder 11 to stop for a predetermined time at the placement position P1 and the imaging position P3. Preferably, this predetermined time, i.e., the operation interval of the drive device 13, is set to a short time within a range where placement of the test strip 100 onto the test strip holder 11 and imaging of the test strip 100 are not hindered. An example of the predetermined time is 5 seconds to 10 seconds. An example of the drive time of the drive device 13 is 0.3 seconds to 1 second.

The imaging part 20 includes the light source 21, the imaging element 22, and a support body 23. The imaging part 20 shown as an example in FIG. 4 includes a pair of the light sources 21 disposed so as to face each other in the X direction to sandwich the imaging element 22. The two light sources 21 and the imaging element 22 are supported by the support body 23 so as to be disposed above the transport part 10. An imaging unit 20a composed of the light sources 21, the imaging element 22, and the support body 23 is configured to be able to move in the Y direction along a pair of guide rails 24 extending in the Y direction. The imaging part 20 includes a drive device 25 that moves the imaging unit 20a along the guide rails 24.

Each light source 21 includes a light emission element for illuminating an imaging target. When the pair of light sources 21 are respectively disposed diagonally above, at the left and right of, the imaging position P3, to illuminate the test strip 100, the test strip 100 can be more uniformly illuminated. The type of the light source 21 is not particularly limited, but a light emitting diode (LED), which is small and generates less heat, is preferably used. In the sample analyzer 1, since the degree of coloration of each reagent pad 102 of the test strip 100 is measured, a light emission element that outputs white light is used as the light emission element forming the light source 21. The light source 21 may be provided with a diffusion plate for uniformizing light outputted from the light emission element.

The imaging element 22 is an element for capturing a two-dimensional image of the test strip 100. The imaging element 22 is disposed, above the transport part 10, in a state where the light reception face thereof is oriented downward. In the present embodiment, the imaging range of the imaging element 22 is set to have a size that allows imaging of a portion of the test strip 100. Here, the imaging range means a range in which imaging can be performed in a state where the position of the imaging element 22 is fixed. The imaging element 22 images the test strip 100 while moving in the longitudinal direction (the Y direction) of the test strip holder 11 along the guide rails 24. In this case, the imaging element 22 can be disposed so as to be close to the test strip 100, and the sample analyzer 1 can be downsized.

The length in the Y direction of the imaging range of the imaging element 22 is set to a length, e.g., about one fourth of the length of the test strip 100, that is shorter than the length of the test strip 100. The length in the X direction of the imaging range of the imaging element 22 is preferably a length equal to or larger than the width of the test strip holder 11, and may be such a length in which three test strip holders 11 including both adjacent test strip holders 11 are imaged. An example of the size of the imaging range of the imaging element 22 is 30 mm×30 mm.

The imaging element 22 is a two-dimensional RGB color image sensor such as a CCD (charge coupled device) image sensor or a CMOS (complementary metal-oxide-semiconductor) image sensor, for example. When light is incident on pixels arranged in a grid shape, the imaging element 22 generates charges corresponding to the intensity of light, and takes out the magnitudes of the charges as electric signals, thereby detecting the light intensity of each pixel. The imaging element 22 converts detected light intensity into light and shade data in 256 gradations (gray level), for example, and generates an image on the basis of this data.

The support body 23 supports the light sources 21 and the imaging element 22 in a state where the positional relationship between the pair of light sources 21 and the imaging element 22 is not changed. The support body 23 is mounted in a state of being able to move in a sliding manner in the Y direction with respect to the pair of guide rails 24. Therefore, even when the support body 23 moves in the Y direction along the guide rails 24, the illumination condition when the imaging element 22 images the test strip 100 is not substantially changed.

The drive device 25 is a motor, and moves the imaging unit 20a along the guide rails 24. The drive device 25 may continuously move the imaging unit 20a, or may intermittently move the imaging unit 20a by repeating movement and stop in a predetermined time. The imaging element 22 of the imaging unit 20a images all of the reagent pads 102 on the test strip 100 while moving in the Y direction. In addition, the imaging element 22 images an identification indication 103 (see FIG. 6 described later) of the test strip 100.

The display and input part 30 is a device equipped with a function as a display part and a function as an input part. An example of a suitable display and input part 30 is a touch panel-type display. In the upper cover 70a of the housing 70, an opening 73 for exposing the surface of the display is formed. The surface of the display is disposed approximately flush with the upper face of the upper cover 70a in the right side portion, of the sample analyzer 1, which is one step higher. The type of the display may be either of a liquid crystal display and an organic EL display, and is not particularly limited. Details of the screen displayed on the display and input part 30 will be described later.

As described above, the board 55 is a printed board having installed thereon a microcomputer forming the controller 50, and is communicably connected to the transport part 10, the imaging part 20, the display and input part 30, the test strip detection part 40, and the printing part 60. Although details will be described later, the controller 50 comprehensively controls operation of the sample analyzer 1, and executes analysis of the sample 110 by analyzing a test strip image acquired by the imaging part 20. In addition, the controller 50 causes the display and input part 30 to display a test strip image and executes control regarding dirt detection of the test strip holder 11. The board 55 is disposed in the housing 70 on the apparatus rear side with respect to the transport part 10, but the shape and the disposition of the board 55 are not particularly limited.

The test strip holder 11 and the test strip 100 will be described in detail with reference to FIG. 5 and FIG. 6. FIG. 5 is a perspective view of the test strip holder 11. FIG. 6 is a perspective view of the test strip 100.

As shown in FIG. 5, the test strip holder 11 is a tray-like holder having: a bottom plate 11b having a rectangular shape in a plan view; and a pair of side walls 11c respectively standing at both end portions in the width direction of the bottom plate 11b. In addition, the test strip holder 11 has a pair of extensions 11d protruding from the upper ends of the respective side walls 11c toward the outside in the width direction of the holder. In the test strip holder 11, an accommodation part 11a surrounded, on three sides, by the bottom plate 11b and the pair of side walls 11c is formed. The accommodation part 11a is a recess in which a test strip 100 is placed. In the accommodation part 11a, the upper face of the bottom plate 11b on which the test strip 100 is placed is one step lower, and the side walls 11c are respectively disposed on both left and right sides. Therefore, falling of the test strip 100 during movement of the test strip holder 11 can be prevented.

On the upper face of the bottom plate 11b, two projections 11e having rib shapes are formed. The two projections 11e are formed with an interval in the length direction of the test strip holder 11, and each support the test strip 100. That is, the test strip 100 is placed on the projections 11e. In this case, the test strip 100 is supported at two places, and thus, even when a sample 110 is attached to the test strip 100, the test strip 100 can be prevented from sticking to the upper face of the bottom plate 11b. The height of each projection 11e is lower than the height of the side wall 11c. The interval between the projections 11e may be any length as long as the test strip 100 can be stably supported.

The shape of each projection 11e is not particularly limited, but preferably, the width is gradually narrowed toward the leading end of the projection 11e, and the cross section in the width direction has a triangular shape. In the example shown in FIG. 5, each projection 11e is formed over the side walls 11c and the extensions 11d, but the projection 11e may be formed only at the bottom plate 11b. The projection 11e is the portion with which the test strip 100 comes into contact. Therefore, when a determination region 120 for dirt detection described later is limited to a portion of the placement face of the test strip holder 11, the portion where the projection 11e is formed may be set to be the determination region. Here, the placement face of the test strip holder 11 is the face on which the test strip 100 oriented above in the vertical direction is placed at the placement position P1, and, unless otherwise specified, includes not only the upper face of the bottom plate 11b but also the upper faces of the extensions 11d.

A width W1 of the accommodation part 11a is, at the narrowest portion where the projection 11e is formed, 1.5 times to 3.0 times of the width of the test strip 100, for example. A specific example of the width W1 is 5 mm to 20 mm. The width W1 of the accommodation part 11a is sufficiently wide with respect to the width of the test strip 100. However, when the test strip 100 is placed on the test strip holder 11, the test strip 100 may touch the extension 11d, and the sample 110 may attach to the extension 11d. The length of the test strip holder 11 may be shorter than the length of the test strip 100, and the test strip 100 is placed in a state where the grip part 104 sticks out of the test strip holder 11.

Preferably, the color of the test strip holder 11 is a dark color such as black. In this case, contrast between the test strip holder 11 and the test strip 100 is enhanced, which facilitates extraction of the image of the test strip 100 from the image captured by the imaging part 20. When the color of the test strip holder 11 is black, dirt attached to the test strip holder 11 is also easily detected.

As shown in FIG. 6, the test strip 100 has a base 101 having a rectangular shape in a plan view, and reagent pads 102 provided on one face of the base 101. In the present embodiment, the operator immerses the test strip 100 into a sample 110, whereby the reagent pads 102 are impregnated with the sample 110. The test strip 100 is a so-called multi-test piece in which a plurality of reagent pads 102 are disposed in the length direction of the base 101. Therefore, a plurality of components contained in the sample 110 can be analyzed by using one test strip 100. Each reagent pad 102 contains a reagent that reacts with an analysis target component, and if the analysis target component is contained in the sample 110 in which the test strip 100 has been immersed, the reagent pad 102 exhibits color. The sample analyzer 1 analyzes an image of the reagent pad 102, and performs semi-quantitation of the component in the sample 110.

The test strip 100 has a plurality of types of reagent pads 102 containing reagents that respectively react with occult blood, sugar, protein, ketone body, nitrites, creatinine, albumin, urobilinogen, and white blood cells contained in urine, for example. Each reagent pad 102 changes in color in accordance with the concentration of the analysis target component contained in urine, and in general, the higher the concentration, the darker the color becomes. Thus, semi-quantitation of the analysis target component is possible by analyzing the degree of coloration of the reagent pad 102. The test strip 100 may have a reagent pad 102 that allows analysis of pH of urine. The number of reagent pads 102 is not particularly limited, and an example thereof is 10 to 15.

On the test strip 100, for example, the reagent pads 102 each having a quadrangular shape in a front view are disposed at a predetermined interval in the length direction of the base 101. Preferably, the respective reagent pads 102 are closely disposed at an interval that can sufficiently inhibit a bridge abnormality described later. The predetermined interval is a length shorter than the length of one side of the reagent pad 102, and the interval between the respective reagent pads 102 is a substantially equal interval. On the face, of the base 101, where the reagent pads 102 are provided, the identification indication 103 is provided. The identification indication 103 indicates identification information such as the type and the lot number of the test strip 100, and is composed of a one-dimensional code such as a bar code, a two-dimensional code such as a QR code (registered trademark), or a combination of these.

The base 101 is a base having a length of 100 mm to 150 mm, a width of 3 mm to 7 mm, and a thickness of 0.1 mm to 1 mm, for example. Each reagent pad 102 has a quadrangular shape, in a plan view, whose one side is 3 mm to 7 mm, and has a thickness of 0.5 mm to 2 mm, for example. On one face of the base 101, the plurality of reagent pads 102 are disposed in a range from a first end in the length direction of the base 101 and exceeding the center in the length direction, and the identification indication 103 is provided between a second end in the length direction of the base 101 and the reagent pads 102. The surface, of the base 101, of the portion where no reagent pad 102 is present is used as a standard value in image analysis of the reagent pad 102. An example of a suitable color of the surface of the base is white.

The range from the second end in the length direction of the base 101 to the reagent pads 102 serves as the grip part 104 of the test strip 100 gripped by the operator. The length of the grip part 104 is not particularly limited, but a suitable example is 30% to 45% of the entire length of the base 101. When the operator prepares a test strip 100 to be placed on a test strip holder 11, the operator holds the grip part 104 so as not to touch the reagent pad 102, and immerses the entirety of the reagent pad 102 into a sample 110.

With reference to FIG. 7, a configuration of a control system of the sample analyzer 1 will be described in detail. FIG. 7 is a block diagram showing a schematic configuration of the sample analyzer 1.

As shown in FIG. 7, the sample analyzer 1 includes the controller 50 that comprehensively controls operation of the apparatus. The controller 50 is communicably connected to the transport part 10, the imaging part 20, the display and input part 30, the test strip detection part 40, and the printing part 60, and is configured to transmit a control signal to each device. The controller 50 acquires information necessary for control from each device. In the present embodiment, the controller 50 is installed on the board 55 and housed in the housing 70, but a part of the functions of the controller 50 may be constructed by a server or the like outside the apparatus.

The controller 50 has a calculation part 51 and a storage 52, and is implemented by a microcomputer including a CPU, a RAM, a ROM, an interface, and the like, for example. By the calculation part 51 (CPU) executing a program stored in the storage 52, the controller 50 controls operations of various devices forming the sample analyzer 1. Although details will be described later, the storage 52 stores a test strip image in association with at least one of measurement information selected from measurement day and time information, operator information, identification information of the test strip 100, and identification information of the sample 110. The sample 110 includes a test specimen, and a quality control specimen having a known concentration. The identification information of the sample 110 includes identification information of the test specimen and identification information of the quality control specimen.

The controller 50 controls the drive device 13 of the transport part 10 to move a test strip holder 11 from the placement position P1 to the imaging position P3. At this time, when the test strip 100 placed on the test strip holder 11 is detected at the detection position P2, an image of the test strip 100 is acquired by the imaging part 20 at the imaging position P3. The controller 50 controls the light sources 21, the imaging element 22, and the drive device 25 of the imaging part 20, to cause the imaging unit 20a to image the entirety of the test strip 100, while causing the imaging unit 20a to move in the Y direction. Then, the controller 50 analyzes a test strip image acquired by the imaging part 20, thereby performing analysis of the sample 110.

When the controller 50 has acquired detection information on a test strip 100 from the test strip detection part 40, the controller 50 causes, at a timing when the test strip 100 is transported to the imaging position P3, the imaging unit 20a to start imaging, while causing the imaging unit 20a at the origin position to move in the Y direction. The imaging unit 20a may image the test strip 100 while continuously moving, or may image the test strip 100 at each stop position while stopping a plurality of times. Upon completion of imaging of the test strip 100, the controller 50 returns the imaging unit 20a to the origin position.

Although details will be described later, the controller 50 causes a plurality of test strip images selected by the display and input part 30, to be displayed in one screen of the display and input part 30. The controller 50 detects the type of an abnormality appearing in a test strip image and the abnormality occurrence location, and causes the display and input part 30 to display information indicating the type of the abnormality and the abnormality occurrence location, together with the test strip image. In addition, the controller 50 analyzes the image of the test strip holder 11 acquired by the imaging part 20, to detect dirt on the test strip holder 11.

Prior to analysis of the test strip image, the controller 50 performs image processing such as a correction process, a combining process, and an extraction process, for example. In general, the lightness in the imaging range of the imaging element 22 is nonuniform between a center portion and a peripheral portion of the imaging range. Therefore, the controller 50 may perform a correction process by using a lightness correction table. Since the imaging element 22 images the test strip 100 while moving in the Y direction, the controller 50 combines a plurality of images acquired by the imaging element 22 to generate one test strip image. In the present specification, unless otherwise specified, the test strip image means a combined image in which the entirety of the test strip 100 is shown.

The above extraction process is a process of extracting the image of the test strip 100 from the combined image. The combined image includes not only the image of the test strip 100 but also the image of the test strip holder 11. Therefore, when analysis of the sample 110 is to be performed, only the image of the test strip 100 is extracted from the combined image. For example, the controller 50 executes Hough transform on the combined image to extract a rectangle indicating the outer edge of the test strip 100, rotates the combined image to an appropriate angle on the basis of the inclination of the extracted rectangle, and then detects the edge of the image of the test strip 100, to extract the image of the test strip 100. On the other hand, when dirt on the test strip holder 11 is to be detected, the image of the test strip holder 11 is extracted from the combined image.

As described above, the controller 50 analyzes the test strip image to analyze the sample 110. Specifically, from the degree of coloration of each reagent pad 102 included in the test strip image, the presence or absence of the analysis target component in the sample 110, and when the target component is present, an approximate content thereof are obtained. The operator immerses the test strip 100 into the sample 110, wipes off surplus sample 110, and then places the test strip 100 on a test strip holder 11. Before the test strip 100 is transported to the imaging position P3, the reagent in the reagent pad 102 and the analysis target component in the sample 110 react with each other, whereby the reagent pad 102 exhibits color.

In general, a reading device for reading the identification information of the sample 110 is connected to the sample analyzer 1. A bar code label including the identification information of the sample 110 is attached to a container, such as a urine collection cup or a urine collection tube, that contains the sample 110. The reading device reads this bar code label, and transmits a specimen ID being the identification information of the sample 110, to the controller 50. As the reading device, a bar code reader can be used. Reading of the specimen ID is performed before the test strip 100 is immersed in the sample 110, for example.

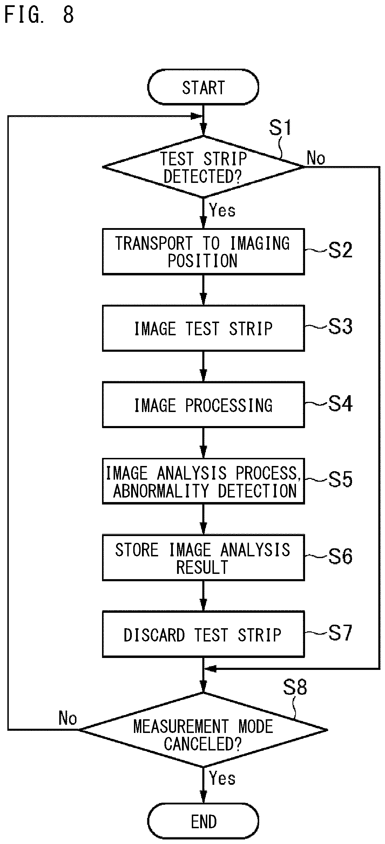

FIG. 8 is a flowchart showing an example of a sample analysis method using the sample analyzer 1. FIG. 8 shows a control procedure after the operator has placed a test strip 100 on a test strip holder 11 at the placement position P1 of the sample analyzer 1 until the test strip 100 is discarded.

As shown in FIG. 8, in step S1, the controller 50 receives a detection signal of a test strip 100 from the test strip detection part 40. When a test strip 100 is placed on a test strip holder 11 at the detection position P2, the test strip detection part 40 outputs a detection signal of the test strip 100 to the controller 50. The process in step S1 is executed for each test strip holder 11. When having acquired the detection signal of the test strip 100 (Yes in step S1), the controller 50 advances the process to step S2. On the other hand, when no detection signal of a test strip 100 is acquired (No in step S1), the controller 50 advances the process to step S8.

In step S2, the controller 50 causes the test strip 100 to move to the imaging position P3. The controller 50 intermittently drives the drive device 13 of the transport part 10 under a prescribed condition, to transport the test strip holder 11 having the test strip 100 placed thereon, from the detection position P2 to the imaging position P3. The transport part 10 is configured such that the plurality of test strip holders 11 mounted to the endless belt 12a move in circulation in the X direction. Therefore, the controller 50 causes not only the test strip holder 11 having the test strip 100 placed thereon but also all of the test strip holders 11 to move from the placement position P1, through the detection position P2, to the imaging position P3.

In step S3, the controller 50 controls the imaging part 20 to image the test strip holder 11 having the test strip 100 placed thereon. Specifically, when the test strip holder 11 for which the test strip 100 has been detected in step S1 has arrived at the imaging position P3, the imaging unit 20a is caused to move from the origin position in the Y direction, to start imaging. Since the test strip holder 11 is transported under a prescribed condition, the controller 50 can determine the timing when the test strip holder 11 for which the test strip 100 has been detected at the detection position P2 arrives at the imaging position P3.

In step S4, the controller 50 performs image processing on the test strip image acquired by the imaging element 22 of the imaging part 20. Image data acquired by the imaging element 22 is transmitted to the controller 50. Examples of the image processing include a correction process, a combining process, and an extraction process, as described above. In step S3, since the imaging element 22 images the test strip 100 while moving in the Y direction, the controller 50 combines a plurality of images to generate one test strip image.

In step S5, the controller 50 analyzes the test strip image having been subjected to the image processing, to obtain the presence or absence of the analysis target component in the sample 110, and when the component is present, an approximate content thereof. The approximate content, of the component in urine, obtained in urine examination of the present embodiment is referred to as a semi-quantitative value in general. Further, the controller 50 determines the presence or absence of an abnormality in the measurement. When the controller 50 has detected an abnormality in the measurement through analysis of the test strip image, the controller 50 causes the display and input part 30 to display the type and the occurrence location of the abnormality. The controller 50 may control the printing part 60 to print, for each sample 110, an analysis result including a semi-quantitative value of each analysis target component.

In step S6, the controller 50 stores the image analysis result (analysis result) of the test strip image into the storage 52. The controller 50 stores, into the storage 52, the semi-quantitative value, abnormality detection information, the test strip image used in the image analysis, and the like, in association with at least one of the measurement information selected from the identification information (specimen ID) of the sample 110, the identification information (test strip type, test strip lot) of the test strip 100, the measurement day and time information, the operator information, and the like. Accordingly, although details will be described later, the operator can cause the display and input part 30 to display the targeted test strip image on the basis of the specimen ID, the operator information, and the like.

In step S7, the controller 50 causes the test strip 100 having been imaged, to move from the imaging position P3 to a discarding position. The test strip holder 11 returns from the imaging position P3 to the placement position P1, but at that time, is inverted at the position of the pulley 12c. At this time, the test strip 100 having been imaged falls from the test strip holder 11 into the collection part 80 to be discarded, and the empty test strip holder 11 is transported to the placement position P1.

In step S8, when the measurement mode is continued, the controller 50 repeats the processes in steps S1 to S7 (No in step S8). When the measurement mode is canceled through operation performed on the display and input part 30 by the operator, the controller 50 stops the transport part 10 and ends the measurement (Yes in step S8). When no test strip 100 is detected at the detection position P2 for a predetermined time, the controller 50 may cancel the measurement mode to stop the transport part 10, and end the measurement.

The processes in steps S1 to S7 are concurrently performed. For example, while image analysis is performed on a preceding test strip 100, the next test strip 100 is transported to the imaging position P3, and further, a test strip 100 next thereto is detected by the test strip detection part 40.

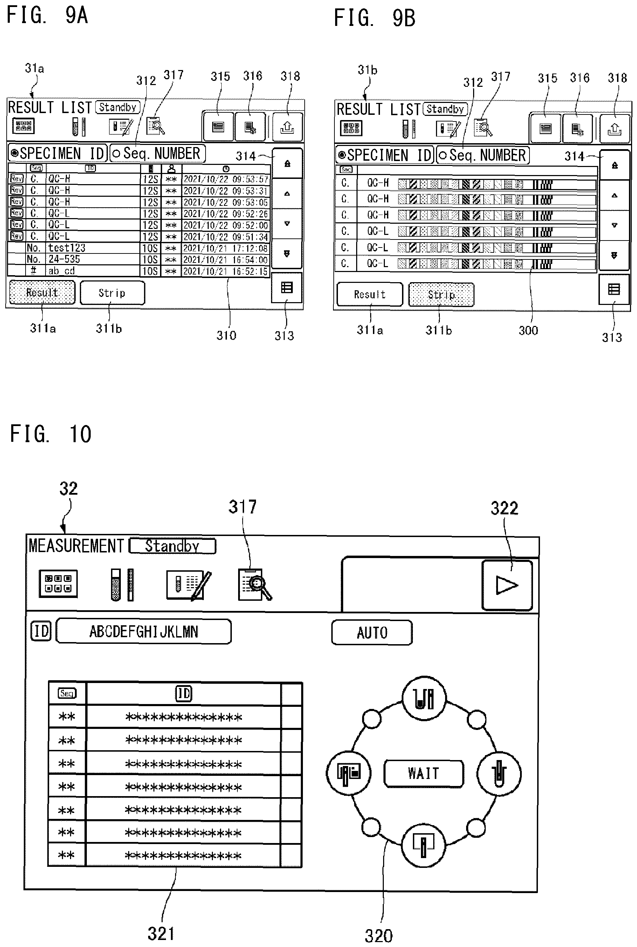

In the following, with reference to FIGS. 9A and 9B to FIG. 16, display screens for the test strip image, and display methods for the test strip image will be described in detail.

FIG. 9A shows an example of a display screen for a sample analysis result list and FIG. 9B shows an example of a display screen for test strip images. Acquisition of an operation signal of the touch panel being the display and input part 30 and display of various screens based on an operation signal, etc., are performed under control by the controller 50.

As shown in FIG. 9A, in a result list screen 31a, indexes of analysis results are displayed in a list form. In a list 310 of the result list screen 31a, from the right side of the screen in order, measurement day and time, identification information of the operator, identification information of the test strip 100, specimen ID, sequence number, and information on viewing history are displayed. In the column of the identification information of the operator, for example, a log-in ID to the sample analyzer 1 when the measurement was performed is displayed. However, the name or the like of the operator may be displayed. Information on the operator is useful for correction of the examination technique. The mark "Rev" indicates that any item of the measurement results is positive.

In the list 310, the type of the test strip 100 is displayed as the identification information of the test strip 100. The sample analyzer 1 can measure a plurality of types of test strips 100, and this information is utilized when the test strip image 300 is displayed for each piece of information on the type of the test strip 100. The specimen ID and the sequence number are the identification information of the sample 110. The specimen ID is unique information assigned to each specimen, and the sequence number indicates the sequential number when the power supply of the apparatus is turned on. In the example shown in FIG. 9A, a test specimen is represented by "No.", a quality control specimen is represented by "C.", and an urgent specimen is represented by "#".

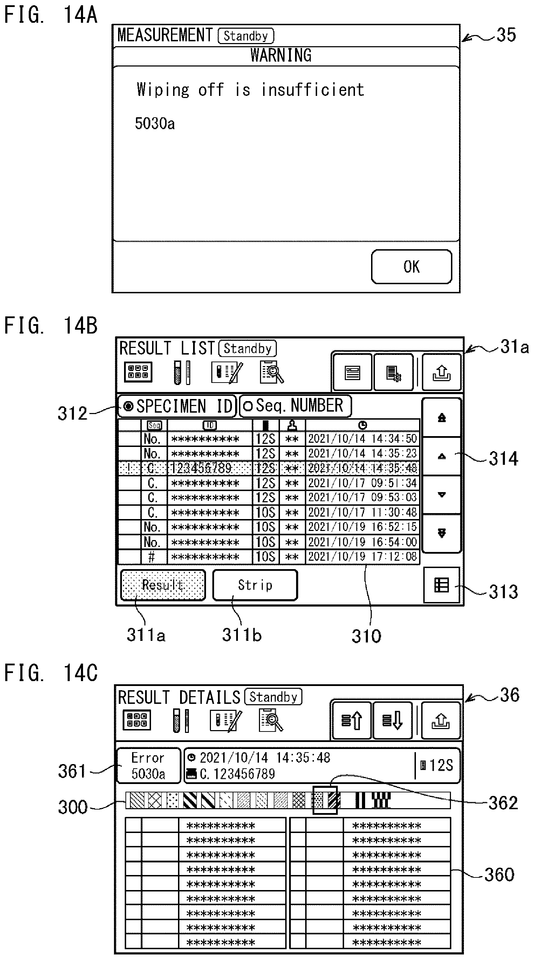

In the result list screen 31a, further, screen switching buttons 311a, 311b, a display condition switching button 312, a selection button 313, a scroll button 314, a result detail display button 315, a narrowing setting button 316, a search button 317, and an information sharing button 318 are displayed. The result detail display button 315 is a button for displaying details of an analysis result of a specimen selected in the list 310. When the result detail display button 315 is pressed, the screen of the display and input part 30 is switched to a result detail screen 36 (see FIG. 14C described later) including a semi-quantitative value of the specimen. The information sharing button 318 is a button for transmitting an analysis result to an external apparatus connected in a wired or wireless manner to the sample analyzer 1.

In the result list screen 31a, the list 310 is disposed at the screen center, and the respective buttons are disposed around the list 310. The list 310 is a list showing indexes of analysis results of the samples 110. Since the analysis result of each sample 110 is obtained through analysis of a test strip image 300, the list 310 can be said to be the list of image analysis results. In the list 310, pieces of measurement information on the respective specimens are displayed in order in accordance with a condition selected through the display condition switching button 312. In the example shown in FIG. 9A, data is displayed in the order of the specimen ID and such that data having a more recent measurement day and time is at a higher position in the list 310.

The screen switching button 311a is a button for switching the screen from a second result list screen 3 1b to the first result list screen 31a. The screen switching button 311b is a button for switching the screen from the first result list screen 31a to the second result list screen 31b. For example, in the result list screen 31a, when the screen switching button 311b indicated as "Strip" is pressed, the screen of the display and input part 30 can be switched to the result list screen 31b. With the provision of the screen switching buttons 311a, 311b, switching of the screen is facilitated, and usability is improved.

The number of pieces of data that can be simultaneously displayed in the list 310 of the result list screen 31a is limited to a predetermined number (as an example, 7 to 15), but through operation of the scroll button 314, the measurement information in a number of pieces exceeding the predetermined number can be confirmed. The number of the test strip images 300 that can be simultaneously displayed in the result list screen 31b may be the same as the predetermined number in the list 310, but in the example shown in FIGS. 9A and 9B, the number of the test strip images 300 is smaller. In this case, the respective test strip images 300 can be displayed in a larger size, and comparison and reference are facilitated. In the result list screen 31b as well, through operation of the scroll button 314, a large number of the test strip images 300 that cannot be simultaneously displayed can be confirmed.

As shown in FIG. 9B, in the result list screen 3 1b, instead of the list 310, a plurality of the test strip images 300 are displayed in parallel. In the result list screens 31a, 31b, displays other than the list 310 and the test strip images 300 are common between the two screens. In the result list screen 31b, a plurality of the test strip images 300 are displayed together with the specimen IDs and the sequence numbers, respectively. When a plurality of the test strip images 300 are displayed so as to be arranged in one screen, if, for example, an abnormality has occurred in an analysis result of a quality control specimen, identification of the cause of the abnormality is facilitated.

Preferably, the controller 50 causes a plurality of the test strip images 300 to be displayed in the same orientation in the result list screen 31b such that, with respect to the plurality of the test strip images 300, the reagent pads 102 of the same type of the respective test strips 100 are arranged in a line. In this case, comparison and reference between the plurality of the test strip images 300 are facilitated. In the example shown in FIG. 9B, the respective test strip images 300 are aligned such that images of the test strips 100 all being of the same type are displayed, the reagent pads 102 of the same type are arranged in the up-down direction of the screen, and the respective identification indications 103 are also arranged in the up-down direction. The number of the test strip images 300 that can be simultaneously displayed in the result list screen 31b can be changed as appropriate according to the size, etc., of the display and input part 30, and is not particularly limited. An example thereof is 5 to 10.

As described above, when the screen switching button 311b has been operated on the result list screen 31a, the controller 50 switches the screen of the display and input part 30 to the result list screen 31b, and causes a plurality of the test strip images 300 to be displayed in parallel. The controller 50 further has a function of causing the display and input part 30 to display a plurality of the test strip images 300 selected through operation of the display and input part 30. The controller 50 causes the list 310 to be displayed in the result list screen 31a, and causes a plurality of the test strip images 300 selected from the list 310 by the operator, to be displayed. When the number of the display targets selected in the result list screen 31a is one, one test strip image 300 is displayed in the result list screen 31b.

In the present embodiment, when the selection button 313 is pressed, the mode is shifted to a first selection mode in which the display target of the test strip image 300 can be selected. In the first selection mode, when a column of the measurement information on each specimen in the list 310 is pressed, the display target can be selected. When the screen switching button 311b is pressed in a state where a specimen is selected, only the test strip image 300 corresponding to the specimen selected from the list 310 by the operator is displayed in the result list screen 31b.

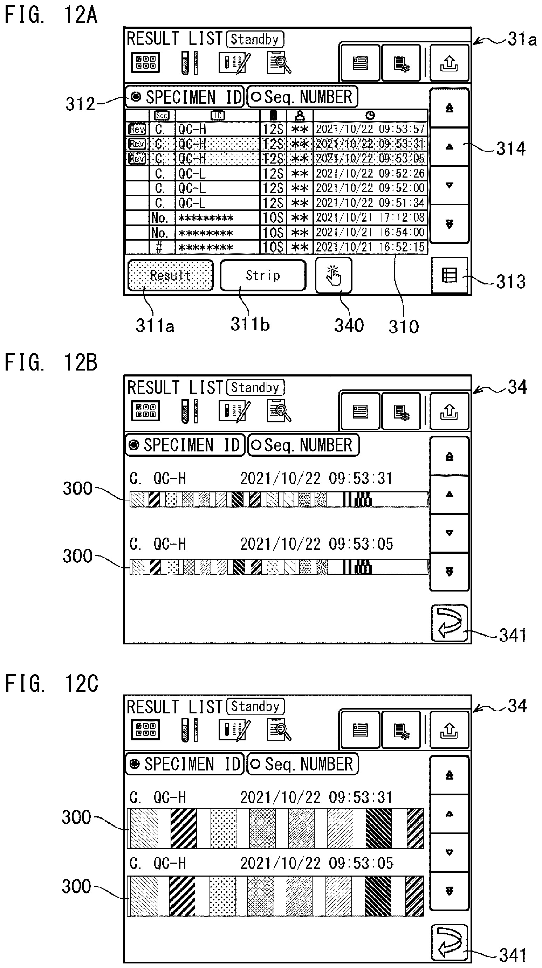

Although details will be described later, through operation of the selection button 313, a motion button 340 (see FIG. 12 described later) may be displayed. The motion button 340 is a button for moving to an enlargement display screen 34 in which an enlarged display of the test strip image 300 is allowed. Alternatively, the motion button 340 originally displayed in the result list screens 31a, 31b may be enabled through operation of the selection button 313 and selection of the display target. The motion button 340 becomes operable in a state where at least one display target is selected.

Since the list 310 includes the measurement day and time information, the operator information, the identification information of the test strip 100, and the identification information (including the sequence number for identifying a test specimen and a quality control specimen) of the specimen, the operator can select the display target of the test strip image 300 on the basis of these pieces of measurement information. Further, the controller 50 can cause the list 310 including only the information on specific specimens narrowed on the basis of these pieces of measurement information, to be displayed. For example, the controller 50 can cause the list 310 including only the information on quality control specimens to be displayed, and cause a plurality of the test strip images 300 selected from the list, to be displayed.

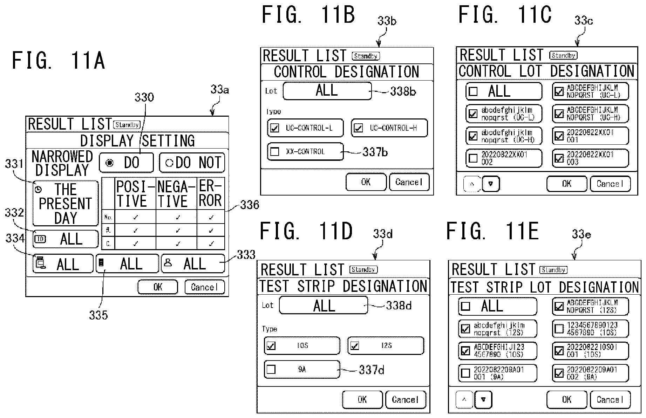

In the present embodiment, when the narrowing setting button 316 is pressed, the mode is shifted to a second selection mode in which the display target of the test strip image 300 can be selected on the basis of the measurement information. When having acquired an operation signal of the narrowing setting button 316, the controller 50 switches the screen of the display and input part 30 to a selection screen 33a (see FIG. 11 described later), and causes a plurality of the test strip images 300 corresponding to the measurement information selected in the selection screen 33a, to be displayed. With this function, the operator can cause only the targeted test strip image 300 to be displayed on the basis of one or a plurality of pieces of the measurement information.

The search button 317 is a button for searching for an analysis result of a targeted specimen by inputting information such as the specimen ID or the operator. By using this search button 317 as well, the operator can select the display target of the test strip image 300 on the basis of the measurement information.

FIG. 10 shows an example of a measurement screen. As shown in FIG. 10, an indicator 320, a list 321, and a measurement button 322 are displayed in a measurement screen 32. The measurement screen 32 is a screen that is displayed when a measurement of the sample 110 is performed. Through operation of the measurement button 322, the operator can start a measurement of the sample 110 and can stop the measurement. In the measurement screen 32, as in the result list screens 31a, 31b, the search button 317 and the like may be provided.

The indicator 320 is a guidance display for notifying the operator of the timings of immersion of a test strip 100 into a sample 110, wiping off of the sample 110 attached to the test strip 100, and placement of the test strip 100 onto a test strip holder 11. When the operator has pressed a measurement start button 322, guidance by the indicator 320 proceeds, and the operator can prepare a test strip 100 to be placed on a test strip holder 11 in accordance with the guidance. In the list 321, specimen IDs, etc., of the samples 110 being measured or having been measured are displayed. For example, when a specimen ID is read by a bar code reader, the specimen ID is displayed in the list 321.

FIGS. 11A to 11E each show an example of a selection screen for narrowing the display target of the analysis result on the basis of the measurement information. As shown in FIG. 11A, in the selection screen 33a, a narrowed display selection button 330 for selecting whether or not to perform narrowed display of the analysis results is displayed in an upper portion of the screen. Below the narrowed display selection button 330, a plurality of selection buttons for selecting the measurement information serving as a narrowing condition for narrowing the display target are disposed.

The narrowed display selection button 330 includes two buttons of "DO" and "DO NOT" as to execution of narrowed display. The narrowed display selection button 330 is a radio button, for example. When the button of "DO" as to execution of the narrowed display has been selected, operation of other selection buttons is enabled, and narrowing setting (selection of the measurement information) for the display target can be performed. The controller 50 stores the narrowing condition, which is the selected measurement information, into the storage 52. Then, in accordance with this narrowing condition, the list 310 of specific specimens are caused be displayed in the result list screen 31a, and specific test strip images 300 are caused to be displayed in the result list screen 31b. Meanwhile, when the button "DO NOT" as to execution of the narrowed display has been selected, operation of other selection buttons is not enabled, and in the result list screen 3 1b, the test strip images 300 are displayed in the order of the specimen ID or in the order of the sequence number.

In the selection screen 33a, six selection buttons for selecting the measurement information are displayed. A first selection button 331 is a selection button for selecting measurement day and time. Through operation of the first selection button 331, arbitrary measurement day and time, such as: a specific day or period, e.g., the present day, yesterday, April 3, 2023, or April 4 to 7, 2023; or a specific time frame, e.g., 9 o'clock to 11 o'clock, can be selected. A second selection button 332 is a selection button for selecting the specimen ID. Through operation of the second selection button 332, on the basis of the specimen ID, a specific specimen can be selected out of test specimens, or a specific specimen can be selected out of quality control specimens.

A third selection button 333 is a selection button for selecting the operator. Through operation of the third selection button 333, the operator who prepared the test strip 100 that was placed on a test strip holder 11 and performed the measurement of the sample 110 can be selected. In the sample analyzer 1, which is a semiautomatic apparatus, the examination technique may influence the analysis result to a large extent. In particular, when an operator with little experience performs a measurement, it is assumed that the analysis result of a quality control specimen may deviate from an appropriate range, or a measurement error may easily occur, for example. When the test strip images 300 are caused to be displayed with the operators narrowed, it becomes easy to investigate the cause when an appropriate analysis result has not been obtained. In addition, this is also effective for correction and training of the examination technique.

A fourth selection button 334 is a selection button for selecting the quality control specimen. In general, the quality control specimen is also referred to as a control reagent, or simply as a control. When the fourth selection button 334 is pressed, the screen of the display and input part 30 is switched to a selection screen 33b shown in FIG. 11B. As shown in FIG. 11B, in the selection screen 33b, a type selection button 337b for selecting the type of the quality control specimen, and a lot number selection button 338b for selecting the lot number of the quality control specimen are displayed.

In the example shown in FIG. 11B, three check boxes are displayed as the type selection button 337b. The operator can select a specific quality control specimen out of a plurality of types of quality control specimens, by checking the box of the quality control specimen to be displayed. When the lot number selection button 338b in the selection screen 33b is pressed, the screen of the display and input part 30 is switched to a selection screen 33c shown in FIG. 11C. As shown in FIG. 11C, in the selection screen 33c, a plurality of check boxes corresponding to the respective lot numbers of the quality control specimens are displayed.

As the identification information of the quality control specimen, further, identification information of each container (hereinafter, referred to as "vial") in which the quality control specimen is put may be selectable. As for the quality control specimen, in general, an amount that can be put into a plurality of vials is prepared in an identical lot. In the storage 52, for example, identification information of each vial having an identical lot number is stored together with the type and the lot number of the quality control specimen. Although details will be described later, if the identification information of the vials is stored, a measurement abnormality due to immersion in an identical vial performed more than the set number of use times can be easily identified.

A fifth selection button 335 is a selection button for selecting the test strip 100. When the fifth selection button 335 is pressed, the screen of the display and input part 30 is switched to a selection screen 33d shown in FIG. 11D. As shown in FIG. 11D, in the selection screen 33d, a type selection button 337d for selecting the type of the test strip 100 and a lot number selection button 338d for selecting the lot number of the test strip 100 are displayed. In the example shown in FIG. 11D, three check boxes are displayed as the type selection button 337d. The operator can select a specific test strip 100 out of a plurality of types of test strips 100 by checking the box of the test strip 100 to be displayed.

When the lot number selection button 338d in the selection screen 33d is pressed, the screen of the display and input part 30 is switched to a selection screen 33e shown in FIG. 11E. As shown in FIG. 11E, in the selection screen 33e, a plurality of check boxes corresponding to the respective lot numbers of the test strips 100 are displayed. In the example shown in FIG. 11E, a check box of the lot number of the type "9A" of the test strip 100 not selected in the selection screen 33d is also displayed. However, even if this lot number is selected, unless "9A" is selected in the selection screen 33d, "9A" does not become the display target.

A sixth selection button 336 is a selection button for selecting the sequence number of the specimen and classification of the analysis result. Through operation of the sixth selection button 336, the classification of the analysis result to be displayed can be selected for each sequence number. As specific examples, selection of a test specimen or a quality control specimen for which a measurement error has occurred, and selection of various specimens for which measurement errors have occurred are exemplified. In the example shown in FIG. 11A, as the sixth selection button 336, check boxes in a list form that includes rows of the sequence number and columns of the classification of the analysis result are displayed.

FIGS. 12A to 12C each show an example of a screen of enlarged display of the test strip image 300. As shown in FIG. 12A, in the result list screen 31a, the motion button 340 for shifting to a motion mode that allows enlarging display operation of the test strip image 300 with respect to the selected specimen is displayed. For example, the operator can narrow the display target of the test strip image 300 in the selection screen 33a and further select a test strip image 300 to be displayed in an enlarged manner in the first result list screen 31a or the second the result list screen 31b. In the example shown in FIG. 12A, two specimens are selected in the result list screen 31a. When the motion button 340 is pressed in this state, the screen of the display and input part 30 is switched to the enlargement display screen 34 shown in FIG. 12B and FIG. 12C.

FIG. 12B shows a state before the enlarging operation and FIG. 12C shows a state after the enlarging operation. In the enlargement display screen 34, the test strip image 300 corresponding to each specimen selected in the result list screen 31a is displayed together with the specimen ID, the sequence number, and the measurement day and time. In the enlargement display screen 34, the operator information may be displayed. In the enlargement display screen 34, a plurality of the test strip images 300 can be displayed. However, the maximum display number of the test strip images 300 in the enlargement display screen 34 is preferably limited to an appropriate number according to the screen size, etc., of the display and input part 30, and, as an example, is set to 2 to 5. Preferably, the plurality of the test strip images 300 are displayed in parallel in the same orientation such that the reagent pads 102 of the same type of the respective test strips 100 are arranged in a line.

In the enlargement display screen 34, a return button 341 is displayed. The return button 341 is a button for returning to the original screen. When the return button 341 is pressed, the screen of the display and input part 30 returns to the first result list screen 31a or the second the result list screen 3 1b that has been displayed immediately before the screen has been moved to the enlargement display screen 34. That is, the return button 341 is a button for canceling the motion mode.

The controller 50 causes a portion of the test strip image 300 to be displayed in an enlarged manner, on the basis of an enlargement instruction from the display and input part 30. The enlargement instruction is made through operation of tapping a portion to be enlarged of the test strip image 300, for example. Alternatively, the enlargement instruction may be made through another operation, such as a double tapping operation, a long press operation, or a pinch operation. The operation for inputting an enlargement instruction is not particularly limited. An operation for reducing the enlarged image may be set, and a button for enlarging and reducing the test strip image 300 may be provided in the enlargement display screen 34.

When an operation for enlarging a portion of the test strip image 300 has been performed, the controller 50 causes a portion of the test strip image 300 including the portion corresponding to the operation signal to be displayed in an enlarged manner at a predetermined magnification. The enlargement magnification of the test strip image 300 is one or a plurality of fixed magnifications determined in advance, for example. When a portion of the test strip image 300 is tapped, the portion and the vicinity thereof are displayed in an enlarged manner at a magnification determined in advance. The enlargement magnification may be changeable in accordance with the number of times of operations such that the enlargement magnification is increased when tapping is further performed. The enlargement magnification may be arbitrarily changeable.

Preferably, the enlarged display of the test strip image 300 is synchronized between a plurality of images. When the controller 50 has acquired an enlargement instruction with respect to one image out of a plurality of the test strip images 300 displayed in the enlargement display screen 34, the controller 50 causes the same portion, with respect to all of the images, to be displayed in an enlarged manner at the same magnification. When the controller 50 has acquired a reduction instruction with respect to one test strip image 300, the controller 50 causes the same portion, with respect to all of the images, to be displayed in a reduced manner at the same magnification. In this case, the targeted portion of the plurality of the test strip images 300 can be quickly compared and referred to in a simple manner.

Further, the controller 50 causes another portion of the test strip image 300 to be displayed in an enlarged manner on the basis of a change instruction, from the display and input part 30, for changing the display region. In the enlargement display screen 34 shown in FIG. 12C, a portion of each test strip image 300 is displayed in an enlarged manner. However, for example, through swipe operation of sliding a finger touching the screen to the left or right, the region of the enlarged display can be changed. The operation for inputting the change instruction for changing the display region is not limited to the swipe operation. When an operation for changing the display region has been performed on the enlargement display screen 34, the controller 50 changes the portion to be displayed in an enlarged manner on the basis of the operation signal.

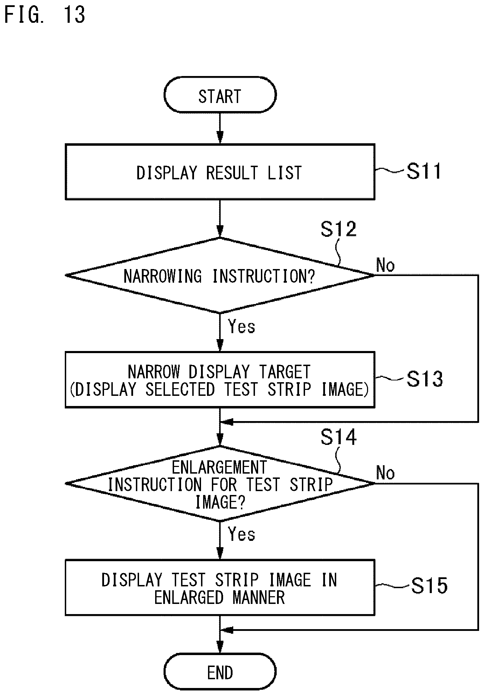

FIG. 13 is a flowchart showing an example of a display process for the test strip image 300. In FIG. 13, a control procedure in which the display and input part 30 is caused to display the result list screen 31a, then, the display target is narrowed in the selection screen 33a, and then the test strip image 300 is displayed in an enlarged manner, is shown. However, the presence or absence of this narrowing does not influence the enlarging display process itself.

As shown in FIG. 13, in step S11, the controller 50 causes the display and input part 30 to display the result list screen 31a. For example, the controller 50 causes the result list screen 31a to be displayed on the basis of operation of the display and input part 30 by the operator. However, the controller 50 may cause the result list screen 31a to be displayed when the measurement of the sample 110 has ended. The result list screen 31a may be set as a default screen to be displayed at activation of the sample analyzer 1. In the result list screen 31a, as a list of the analysis results, pieces of the measurement information on the respective specimens are displayed in a list form, and the screen switching button 311b is displayed.

When the controller 50 has acquired an operation signal of the screen switching button 311b, the controller 50 switches the screen of the display and input part 30 to the result list screen 31b, and causes a plurality of the test strip images 300 to be displayed in parallel. In the result list screen 3 1b, the plurality of the test strip images 300 are displayed such that the reagent pads 102 of the same type of the respective test strips 100 are arranged in a line, and the screen switching button 311a is displayed. In the result list screen 31b, the specimen ID, the sequence number, and the like are displayed adjacent to each test strip image 300 such that the test strip image 300 can be identified. Further, in the result list screen 31b, information such as the number, the name, and the like of the reagent pads 102 may be displayed.

In step S12, the controller 50 receives a narrowing instruction for narrowing the display target. The narrowing instruction is inputted through operation of the narrowing setting button 316 and the selection buttons in the selection screen 33a. When having acquired the narrowing instruction (Yes in step S12), the controller 50 advances the process to step S13. On the other hand, when having acquired no narrowing instruction (No in step S12), the controller 50 advances the process to step S14.

When the narrowing setting button 316 has been pressed in the first result list screen 31a or the second the result list screen 31b, the controller 50 switches the screen of the display and input part 30 to the selection screen 33a. Then, when the narrowed display selection button 330 of "DO" as to execution of the narrowed display has been selected in the selection screen 33a, operation of the first selection button 331 to the sixth selection button 336 is enabled. The controller 50 stores the narrowing condition selected through operation of the first selection button 331 to the sixth selection button 336.

In step S13, in accordance with the above narrowing condition, the controller 50 narrows the display target in the result list screen 31a, 31b and causes only the selected specimens to be displayed in the result list screen 31a, 31b. In the result list screen 31a, the list 310 including only the specimens selected in step S12 are displayed, and in the result list screen 31b, only the test strip images 300 selected in step S12 are displayed. Although enlarged display of the test strip image 300 is possible without performing the narrowing in steps S12, S13, it is preferable to advance the process through steps S12, S13 and then to step S14 for easy search with respect to the target of enlarged display.

In step S14, the controller 50 receives an enlargement instruction for enlarging the test strip image 300. The enlargement instruction is inputted through operation or the like of tapping the portion to be enlarged of the test strip image 300. In the present embodiment, since the enlargement instruction is inputted in the enlargement display screen 34, as a prerequisite for enlarged display of the test strip image 300, it is necessary that the target of enlarged display has been selected in the result list screen 31a, 31b, and the screen has been shifted to the enlargement display screen 34 through operation of the motion button 340. When having acquired the operation signal of the motion button 340, the controller 50 switches the screen of the display and input part 30 to the enlargement display screen 34.

In step S15, the controller 50 causes a portion of a test strip image 300 to be displayed in an enlarged manner in accordance with the above enlargement instruction. For example, when a tap operation has been performed on a portion of a test strip image 300, the controller 50 causes a portion of the test strip image 300 including the portion to be displayed in an enlarged manner. At this time, preferably, the enlargement magnification and the enlargement range are synchronized between the plurality of the test strip images 300 displayed in the enlargement display screen 34. That is, when an enlargement instruction has been acquired with respect to one of a plurality of the test strip images 300, the same portion is displayed in an enlarged manner at the same magnification with respect to all of the images. When swipe operation or the like of changing the display region has been performed on the enlargement display screen 34, the controller 50 changes the portion to be displayed in an enlarged manner.

When having acquired an operation signal of the return button 341 in the enlargement display screen 34, the controller 50 returns the screen of the display and input part 30 to the first result list screen 31a or the second the result list screen 31b having been displayed immediately before the screen has been moved to the enlargement display screen 34, to cancel the motion mode. It is also possible to externally output the information to be displayed in the display and input part 30, to a display part of an external apparatus connected to the sample analyzer 1. In this case, the display part of the external apparatus can be caused to display the same screen as in the display and input part 30.

FIGS. 14A to 14C each show an example of an error display screen. As shown in FIG. 14A, when an abnormality in a measurement has been detected through analysis of the test strip image during a measurement of the sample 110, an error display screen 35 for notifying that an abnormality has occurred in the measurement is displayed in the display and input part 30. In the error display screen 35, information indicating the content of the abnormality, such as "Wiping off is insufficient", is displayed, for example. An error code, "5030a" indicating the type of the abnormality may be displayed.

When having detected an abnormality in the measurement through analysis of the test strip image, the controller 50 may switch the measurement screen 32 to the error display screen 35, or may cause the error display screen 35 to be displayed in a pop up manner on the measurement screen 32. When the operator presses an "OK" button at the lower right of the screen after confirming the content of the abnormality in the error display screen 35, the operator can return the screen of the display and input part 30 to the measurement screen 32. In this case, when the measurement reaches a certain point, if the screen is switched to the result list screen 31a, the details of the abnormality can be confirmed. Alternatively, the measurement of the sample 110 is interrupted, and the search button 317 is operated, whereby the details of the abnormality can be immediately confirmed.

As shown in FIG. 14B, in the list 310 in the result list screen 31a, a mark indicating that an abnormality in the measurement has occurred is displayed. In the example shown in FIG. 14B, at the column of the specimen in which a coloring abnormality has occurred, a mark "!" is affixed. There are also cases where, in the list 310, a mark "Err" indicating that a measurement error has occurred and a measurement result has not been obtained is displayed. The controller 50 may cause a mark different for each type of the abnormality to be displayed in the list 310. The mark displayed in the list 310 allows the operator to easily understand the specimen for which an abnormality in the measurement has occurred. When the operator selects the specimen having the "!" mark and presses the result detail display button 315, the result detail screen 36 including the content of the abnormality can be caused to be displayed.

As shown in FIG. 14C, in the result detail screen 36, a first label 361 and a second label 362 are displayed together with a list 360 including semi-quantitative values of specimens. In addition, the measurement information such as the specimen ID, the sequence number, the measurement day and time, and the type of the test strip 100 is also displayed in the result detail screen 36. The first label 361 is an indication indicating that an abnormality in the measurement has occurred, and includes characters "Error" and an error code "5030a" indicating the type of the abnormality. The second label 362 is an indication indicating the occurrence location of the abnormality in the test strip 100, and is displayed so as to overlap the test strip image 300.

The controller 50 detects the type of the abnormality having appeared in the test strip image 300 and the abnormality occurrence location and causes the information that indicates the type of the abnormality and the abnormality occurrence location to be displayed in the result detail screen 36 together with the test strip image 300. In the result detail screen 36, the test strip image 300 may be displayed so as to be limited to only the specimen in which the abnormality in the measurement has occurred, or may be displayed with respect to all of the specimens. The controller 50 detects the abnormality in the analysis result through analysis of the test strip image 300, and stores the type of the abnormality and the abnormality occurrence location into the storage 52.

The controller 50 may cause the second label 362 that is different for each type of the abnormality to be displayed. In the example shown in FIG. 14C, as the second label 362, a mark having a quadrangular frame shape extending across two reagent pads 102 is displayed. However, for each type of the abnormality, the shape, the size, or the color of the mark may be changed, or a different character or sign may be displayed. In this case, from the second label 362, the type of the abnormality can be grasped. For example, for each type of the abnormality, the color of the mark may be changed, and a coloring abnormality may be indicated by red, an uneven-color abnormality may be indicated by orange, a bridge abnormality may be indicated by green, and an immersion abnormality may be indicated by blue. Detailed contents of these abnormalities will be described later.

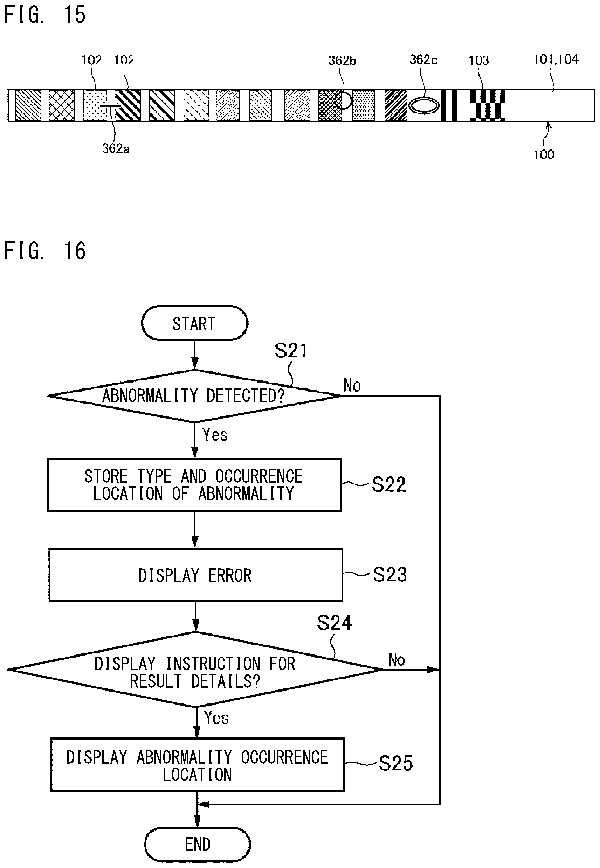

FIG. 15 shows an example of the mark (the second label 362) having a different shape for each type of the abnormality. The shape of the mark indicating the occurrence location of an abnormality is not limited to the quadrangular frame shape shown in FIG. 14C, may be a line shape, a circle shape (single circle), a double circle shape, or the like, as shown in FIG. 15, or may be a polygonal shape other than a quadrangular shape. For example, a mark 362a having a line shape indicates a bridge abnormality, and a mark 362b having a single circle shape indicates an abnormality due to presence of a foreign matter such as dust. A mark 362c having a double circle shape indicates an abnormality due to remaining of the sample 110. The second label 362 may be a solid mark or a shaded mark, but preferably, is a mark surrounding the abnormality occurrence location.

FIG. 16 is a flowchart showing an example of an abnormality display process.

As shown in FIG. 16, in step S21, the controller 50 determines the presence or absence of an abnormality through analysis of a test strip image 300. When having detected an abnormality in the test strip image 300 (Yes in step S21), the controller 50 advances the process to step S22. On the other hand, when no abnormality has been detected (No in step S21), the controller 50 ends this series of abnormality display processes.

In step S22, the controller 50 stores the type and the occurrence location of the detected abnormality into the storage 52 in association with the measurement information such as the specimen ID. The controller 50 can determine the type of the abnormality through analysis of the test strip image 300, and stores an error code corresponding to the determined type of the abnormality, for example.

In step S23, the controller 50 performs error display for notifying the operator that an abnormality has been detected in the measurement. As a specific example, the error display screen 35 is displayed in the display and input part 30. In the error display screen 35, information, etc., indicating the type of the abnormality is displayed, and in addition, a countermeasure, etc., may be displayed.

In step S24, the controller 50 receives a display instruction for displaying details of the abnormality. The display instruction for displaying details of the abnormality is inputted through operation of the result detail display button 315, for example. When having acquired the display instruction for details (Yes in step S24), the controller 50 advances the process to step S25. On the other hand, when having acquired no display instruction for details (No in step S24), the controller 50 skips step S25, and ends this series of abnormality display processes.

In step S25, the controller 50 causes the display and input part 30 to display information indicating the type of the abnormality and the occurrence location of the abnormality. When having acquired an operation signal of the result detail display button 315, the controller 50 switches the screen of the display and input part 30 to the result detail screen 36 including the first label 361 and the second label 362. The first label 361 indicates the occurrence of the abnormality in the measurement in a conspicuous manner. The second label 362 indicates the abnormality occurrence location on the test strip image 300.

For each type of the abnormality, the controller 50 may cause the second label 362 to be displayed with the shape, the size, or the color of the mark changed, or may change the character or sign attached to the mark. The operator can quickly confirm the occurrence location of the abnormality from the second label 362 displayed on the test strip image 300, and can grasp the type of the abnormality from the first label 361, the second label 362, or the test strip image 300. When the test strip image 300 including the abnormality location and a normal test strip image 300 are arranged and compared, the cause of the measurement abnormality can be effectively grasped.

In the following, details of the measurement abnormality detected through analysis of the test strip image 300 will be described. In addition, a method for identifying the cause of an abnormality and a method for identifying the cause of an abnormality in an analysis result of a quality control specimen, through comparison and reference between test strip images 300, will be described with reference to specific examples.

Examples of the measurement abnormality detected through analysis of the test strip image 300 include an immersion abnormality, a bridge abnormality, an uneven-color abnormality, and a coloring abnormality. These abnormalities may be caused due to a quality control specimen, due to a test strip 100, due to the sample analyzer 1, or due to an examination technique. In addition, these may cause the analysis result of the quality control specimen to vary to a large extent. In particular, the measurement abnormality due to the examination technique is most likely to occur, and the examination technique tends to be the cause for the abnormality in the analysis result. When a plurality of the test strip images 300 are arranged in parallel to be compared and referred to, isolation of the cause is facilitated.

In the sample analyzer 1, a test strip image 300 showing a normal analysis result may be stored in advance as a reference standard. Alternatively, the operator may be allowed to register a test strip image 300 to be used as a reference standard. When an abnormality in a measurement or an abnormality in an analysis result of a quality control specimen has occurred, if, for example, the image of the reference standard is used as one of a plurality of test strip images 300 to be compared and referred to, investigation of the abnormality and the cause of the abnormality can be more effectively and accurately performed.

The above immersion abnormality occurs due to presence of a reagent pad 102 that is not sufficiently in contact with the sample 110. In a reagent pad 102 that has not been immersed in the sample 110, the coloration reaction does not proceed, and thus, a correct analysis result cannot be obtained. Insufficient immersion in the sample 110 is likely to occur in a reagent pad 102 close to the grip part 104, and the reflection light intensity of a dry reagent pad 102 is larger than the reflection light intensity of a wet reagent pad 102. Therefore, on the basis of the color (reflection light intensity) of the reagent pad 102 close to the grip part 104, the immersion abnormality can be detected.

The above bridge abnormality occurs when reagent pads 102 adjacent to each other are connected to each other via the sample 110. In this case, the reagents with which the respective reagent pads 102 are impregnated are mutually mixed, which may influence the analysis result. Since the base 101 of the test strip 100 is white, if the sample 110 is present between reagent pads 102 adjacent to each other, the reflection light intensity decreases than when the sample 110 is not present. On the basis of this change in the reflection light intensity, the bridge abnormality is detected. Even when reagent pads 102 are not connected each other via the sample 110, if the sample 110 remains on the base 101, this state can be detected as a wiping off abnormality.

The above uneven-color abnormality occurs due to occurrence of uneven color in a reagent pad 102. For example, uneven color of a reagent pad 102 may occur due to attachment, to the reagent pad 102, of debris of another reagent pad 102, other dirt and dust, sedimentary components in the sample 110, or the like, non-uniformity of the reagent pad 102, or the like. This may influence the analysis result. The uneven-color abnormality is detected on the basis of variation in the gray level of pixels forming the image data of the reagent pad 102. Specific examples thereof include the difference or ratio between the maximum value and the minimum value of the gray level, the variance value, and the like.

The above coloring abnormality denotes a state in which the colors of the reagent pads 102 largely deviate from the respective standard colors. The cause of the coloring abnormality is considered to be deterioration of the test strip 100, a coloration reaction inhibitor contained in the sample 110, excessive immersion in the sample 110, or the like. In such a case, a correct analysis result cannot be obtained. The coloring abnormality in each reagent pad 102 is detected on the basis of the magnitude of color difference of the RGB value of the image data of the reagent pad 102 from a corresponding standard color in the color coordinate space.

For example, when poor color change or uneven color is confirmed in a reagent pad 102 close to the grip part 104 of a test strip 100, when the color of the reagent pad 102 has been excessively changed, or when the sample 110 remains on the base 101, or further, when a bridge has occurred, a measurement abnormality or an abnormality in the analysis result due to the examination technique is suspected. In this case, it is preferable to perform comparison and reference between the test strip image 300 in question and a test strip image 300 under the condition as below.

### <Comparison target>

1) The lot number of the test strip 100 is the same
2) The lot number of the quality control specimen is the same
3) The operator is different

Through comparison and reference to a test strip image 300 according to a measurement in which only the operator is different and the other conditions are the same, influence of the examination technique on the analysis result becomes clear. With respect to a test strip image 300 relating to a specific operator, when poor color change or uneven color of a reagent pad 102 close to the grip part 104 is confirmed, insufficient immersion of the test strip 100 in the sample 110 is inferred. As for excessive color change of a reagent pad 102, excessive immersion is inferred, and as for remaining of the sample 110 on the base 101, insufficient wiping off of the test strip 100 is inferred.

In a measurement using a quality control specimen, when each reagent pad 102 has changed in color and no remaining of the sample 110 on the base 101 is confirmed, but the manner of color change of a specific reagent pad 102 is different, it is suspected that immersion in the quality control specimen in the identical vial has been performed more than the set number of use times. Specifically, there is a case where the manners of color change of reagent pads 102 for which occult blood (BLD), glucose (GLU), and pH are analyzed are different, and color changes of the other reagent pads 102 are appropriate. In this case, it is preferable to perform comparison and reference between the test strip image 300 in question and a test strip image 300 under the condition as below.

### <Comparison target>

1) The lot number of the test strip 100 is the same
2) The lot number of the quality control specimen is the same and the quality control specimen is from an identical vial
3) The operator is the same

The number of use times of the quality control specimen is set to five, for example, but there is a possibility that immersion of the test strip 100 is performed more than the set number of use times by mistake. As compared with a test strip image 300 captured in a measurement of a quality control specimen from an identical vial, when only the test strip image 300 in question includes the above abnormality, use of the quality control specimen more than the set number of use times determined in advance is inferred. When the frequency of occurrence of this problem is high in measurements by a specific operator, it is also effective that a test strip image 300 based on a measurement by a different operator is used as the comparison target.

In a measurement using a quality control specimen having an identical lot number, when each reagent pad 102 has uniformly changed in color and no remaining of the sample 110 on the base 101 is confirmed, but the manner of overall color change of the reagent pads 102 is different, or when one or two reagent pads 102 have changed in color in spots, defect of the test strip 100 is suspected. In this case, it is preferable to perform comparison and reference between the test strip image 300 in question and a test strip image 300 under the condition as below.

### <Comparison Target>

1) The lot number of the test strip 100 is different / the same
2) The lot number of the quality control specimen is the same
3) The operator is the same

Through comparison with an image of a test strip 100 having a different lot number, when it has been revealed that the frequency of occurrence of the above problem is high when a test strip 100 having the same lot number as the test strip 100 of the test strip image 300 in question has been used, presence of a problem in the test strip 100 of the lot number is inferred. Through comparison with an image of a test strip 100 having the same lot number, when color change in spots of the reagent pad 102 is confirmed only in the test strip image 300 in question, it is inferred that the abnormality is a specific abnormality due to the test strip 100 to which debris of another reagent pad 102, other dirt and dust, and the like are attached.

In a measurement using a test strip 100 having an identical lot number, when each reagent pad 102 has uniformly changed in color and no remaining of the sample 110 on the base 101 is confirmed, but the manner of overall color change of the reagent pads 102 is different, defect of the quality control specimen is suspected. In this case, it is preferable to perform comparison and reference between the test strip image 300 in question and a test strip image 300 under the condition as below.

### <Comparison Target>

1) The lot number of the test strip 100 is the same
2) The lot number of the quality control specimen is different / the lot number is the same and the vial is different
3) The operator is the same

Through comparison with a test strip image 300 when a quality control specimen having a different lot number has been used, when it has been revealed that the frequency of occurrence of the above problem is high when a quality control specimen having the same lot number as the quality control specimen of the test strip image 300 in question has been used, presence of a problem in the quality control specimen having the lot number is inferred. Through comparison with a test strip image 300 when a quality control specimen having the same lot number and from a different vial has been used, if the above problem is confirmed only in the test strip image 300 in question, it is inferred that the abnormality is a specific abnormality due to the vial.

As described above, when comparison and reference are performed between a plurality of test strip images 300 displayed in parallel in the display and input part 30, if, for example, a measurement abnormality has occurred or an abnormality has occurred in an analysis result of a quality control specimen, investigation of the abnormality and the cause of large variation can be effectively performed. In the sample analyzer 1, which is a semiautomatic apparatus, variation in the examination technique of the operator in particular can influence the analysis result to a large extent. However, when the test strip images 300 acquired by the respective operators are compared, finding and correcting a problem of the examination technique are facilitated. If comparison and reference to a test strip image 300 according to a measurement in which only the operator is different and the other conditions are the same are performed, influence of the examination technique on the analysis result becomes clear. Therefore, this function of the sample analyzer 1 is also suitable for training of the examination technique.

The function of causing a plurality of test strip images 300 to be displayed in parallel thereby allowing comparison and reference is effective not only in investigation of a measurement abnormality and the cause of an abnormality in an analysis result of a quality control specimen, correction and training of the examination technique, and confirmation of the difference between the lots of quality control specimens and test strips 100 as described above, but also in monitoring of components in urine of an identical patient.

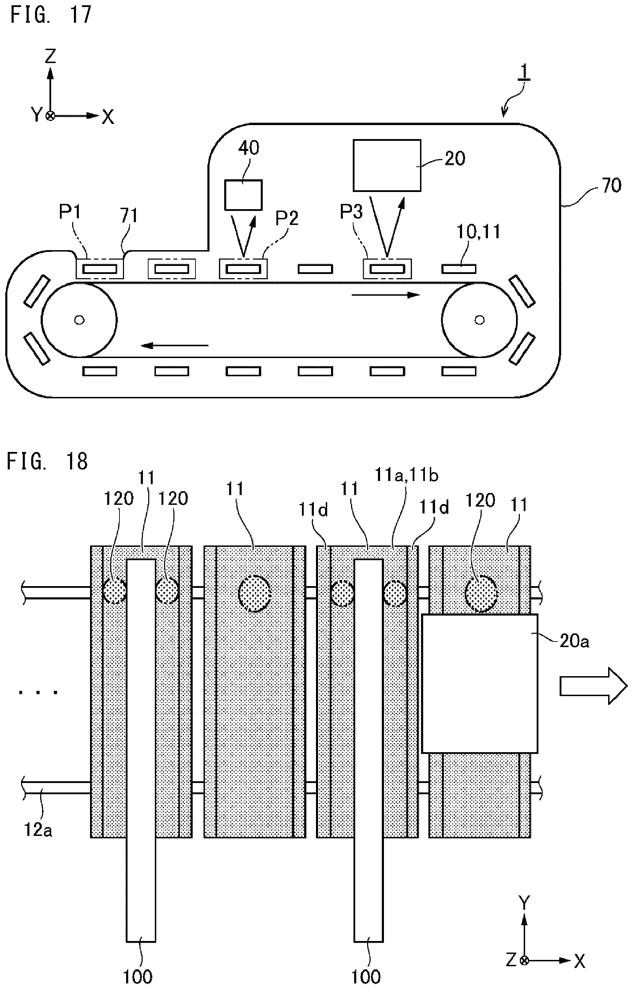

In the following, with reference to FIG. 17 to FIG. 22, a configuration regarding dirt detection, a dirt detection method, and the like for the test strip holder 11 will be described in detail.

As shown in FIG. 17 and FIG. 18, the sample analyzer 1 is configured such that the imaging part 20 images each test strip holder 11 in the transport part 10. The imaging part 20 images the test strip 100 placed on the test strip holder 11, and at this time, the image of the test strip holder 11 is acquired. The sample analyzer 1 analyzes the image of the test strip holder 11, to detect dirt on the test strip holder 11. Although details will be described later, analysis of the image of the test strip holder 11, and detection of dirt on the test strip holder 11 are executed by a function of the controller 50.

As described above, the sample analyzer 1 is a semiautomatic apparatus in which the operator immerses a test strip 100 in a sample 110, wipes off the sample 110 attached to the back face, the side faces, and the like of the test strip 100, and then, places the test strip 100 on a test strip holder 11. Therefore, if the wiping off of the sample 110 is insufficient, the sample 110 may attach to the test strip holder 11, whereby the test strip holder 11 may become dirty. In the sample analyzer 1, the drawer part 75 is provided, and cleaning is performed by a method in which, for example, the entirety of the transport part 10 is drawn from the inside of the apparatus to be immersed in a washing liquid. However, it is required that cleaning of the test strip holder 11 can be effectively and appropriately performed. When the transport part 10 is immersed in a washing liquid, white dirt of calcium hypochlorite may be caused due to insufficient wiping off.

According to the sample analyzer 1, dirt on the test strip holder 11 can be automatically detected, and cleaning of the test strip holder 11 can be effectively performed. In the present embodiment, since the sample 110 is urine, there is also a problem of odor. Therefore, it is preferable that the test strip holder 11 can be quickly cleaned when the test strip holder 11 has become dirty. A plurality of the test strip holders 11 are provided, and utilizing the image of the test strip holder 11 acquired by the imaging part 20, quick and proper dirt detection can be realized.

The sample analyzer 1 has a manual cleaning mode, a continuous cleaning mode, and an automatic detection cleaning mode, for example. The manual cleaning mode is a mode in which the test strip holder 11 is cleaned while being manually transported. The continuous cleaning mode is a mode in which the test strip holder 11 is cleaned while being automatically and continuously transported. In each case, the presence or absence of dirt on the test strip holder 11 is determined by the operator. In contrast, in the automatic detection cleaning mode, dirt is automatically detected through image analysis of the test strip holder 11. The automatic detection cleaning mode may be executable during a measurement of the sample 110.

From the viewpoint of downsizing of the apparatus, cost reduction, and the like, the sample analyzer 1 does not have a function of automatically cleaning the test strip holder 11. Therefore, cleaning of the test strip holder 11 is performed by a method, for example, in which the operator wipes off dirt on the test strip holder 11 by using paper towel or the like. That is, the automatic detection cleaning mode of the sample analyzer 1 is for supporting the cleaning work of the test strip holder 11.

In the automatic detection cleaning mode, the sample analyzer 1 performs a cleaning support operation of automatically detecting a test strip holder 11 for which cleaning is necessary, and disposing the test strip holder 11 at a cleaning position where cleaning can be performed. In the present embodiment, the placement position P1, for the test strip 100, where the opening 71 of the housing 70 is formed serves as the cleaning position. Preferably, further, as the cleaning support operation, the sample analyzer 1 performs an operation of displaying, in the display and input part 30, the location where dirt of the test strip holder 11 is present, and an operation of reconfirming dirt after the cleaning.

When the dirt detection of the test strip holder 11 is performed during a measurement of the sample 110, the controller 50 may control the imaging part 20 to image a test strip holder 11 not having a test strip 100 placed thereon, and analyze this image of the test strip holder 11, to detect dirt on the test strip holder 11. In this case, in the dirt detection of the test strip holder 11, the test strip 100 does not become an obstacle. Whether or not a test strip 100 is placed on the test strip holder 11 can be detected by the test strip detection part 40. Since each test strip holder 11 is transported under a prescribed condition, the controller 50 can determine the timing at which the test strip holder 11 for which no test strip 100 has been detected at the detection position P2 arrives at the imaging position P3.

When the dirt detection of the test strip holder 11 is performed during a measurement of the sample 110, the controller 50 may control the imaging part 20 to image a test strip holder 11 having a test strip 100 placed thereon, to detect dirt on the test strip holder 11. In this case, the portion of the test strip holder 11 is extracted through image processing. There is a possibility that a test strip holder 11 not having a test strip 100 placed thereon has never been used, whereas there is a high possibility that a test strip holder 11 having a test strip 100 placed thereon has been used at least once and has dirt attached thereto. If the dirt detection is not performed on the test strip holder 11 having a test strip 100 placed thereon, a problem that dirt will be accumulated when the same test strip holder 11 is continuously used can also be assumed.

The controller 50 controls the imaging part 20 to cause, at a timing when the targeted test strip holder 11 is transported to the imaging position P3, the imaging unit 20a to start imaging the test strip holder 11, while causing the imaging unit 20a to move in the Y direction. The imaging part 20 is configured to be able to image the entirety of the test strip holder 11. Since the test strip 100 is disposed in the accommodation part 11a of the test strip holder 11, the imaging range of the imaging element 22 may be limited to the range of the accommodation part 11a. However, since there is a possibility that the sample 110 is attached also to the extensions 11d, it is preferable that the entirety of the test strip holder 11 is imaged.

When the dirt detection of the test strip holder 11 is performed during a measurement of the sample 110, the controller 50 may perform the dirt detection of the test strip holder 11 by causing all of the test strip holders 11 to be imaged irrespective of the presence or absence of the test strip 100.

When the length in the X direction of the imaging range of the imaging element 22 is a length corresponding to three test strip holders 11 including both adjacent test strip holders 11 as described above, the dirt detection may be performed by using the image of both adjacent test strip holders 11 also captured when the test strip 100 is imaged. For example, at a timing when a test strip holder 11 having a test strip 100 placed thereon arrives at the imaging position P3, the controller 50 causes three test strip holders 11 including the test strip holder 11 and both test strip holders 11 adjacent thereto to be imaged at one time, and performs the dirt detection with respect to the three test strip holders 11. That is, utilizing the image of the test strip holder 11 captured when the image of the test strip 100 is acquired, the dirt detection can be performed.

The controller 50 detects dirt on the test strip holder 11 through analysis of the image of the test strip holder 11, but as in the case of the analysis of the sample 110, the controller 50 performs image processing such as a correction process, a combining process, and an extraction process, prior to the image analysis. The image captured by the imaging part 20 includes the image of the test strip 100 and the image of the surroundings of the test strip holder 11. In this case, from the image captured by the imaging part 20, the image of the test strip holder 11 is extracted.

In the example shown in FIG. 18, with respect to a test strip holder 11 not having a test strip 100 placed thereon, a center portion in the width direction of the accommodation part 11a is set as the determination region 120 for the dirt detection. On the other hand, with respect to a test strip holder 11 having a test strip 100 placed thereon, both end portions in the width direction of the accommodation part 11a are set as the determination region 120. The determination region 120 is a range in which image analysis for the dirt detection is performed, and can be set to a portion of the placement face of the test strip holder 11 or can be set to a wide range exceeding 50% of the placement face. The determination region 120 may be set to a portion, such as portions in which the projections 11e are formed, in the length direction of the test strip holder 11.

For example, with respect to a test strip holder 11 not having a test strip 100 placed thereon, the controller 50 sets, as the detection target region for dirt, the entirety of the placement face oriented in the direction of the imaging element 22. In this case, the entirety of the placement face serves as the determination region 120, but as described later, the placement face is sectioned into a plurality of determination regions 120, and image analysis is performed. When a test strip 100 is placed, the entirety of the placement face excluding the test strip 100 serves as the determination region 120. For example, when the determination region 120 is limited to a portion, to which dirt is likely to attach, of the test strip holder 11, quick dirt detection can be performed, whereas when the entirety of the placement face is set as the determination region 120, dirt on the test strip holder 11 can be more reliably detected.

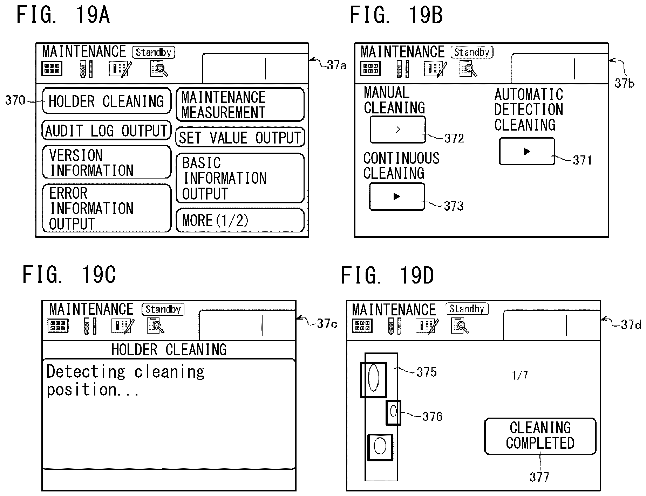

At the time of start-up or shut down of the sample analyzer 1, the controller 50 executes a series of processes for detecting dirt on the test strip holder 11. The automatic detection cleaning mode is executed on the basis of operation performed on a cleaning mode selection screen 37b described later (see FIG. 19B), but may be automatically executed as one of start-up operations when the power supply of the sample analyzer 1 is turned on. The automatic detection cleaning mode may be automatically executed as one of shut down operations of the sample analyzer 1. The automatic detection cleaning mode is executed at a timing when the measurement of the sample 110 is not performed, such as between measurements, at the time of start-up, or at the time of shut down, for example, but is executable also during a measurement of the sample 110 as described above.

The controller 50 controls the transport part 10 to move, to the cleaning position, the test strip holder 11 for which dirt has been detected through image analysis of the test strip holder 11. In the present embodiment, as described above, the placement position P1 serves as the cleaning position. Under control by the controller 50, for example, the transport part 10 may transport the test strip holder 11 for which dirt has been detected, to the cleaning position as necessary, or may perform the dirt detection on all of the test strip holders 11, and then transport the test strip holder 11 for which dirt has been detected, to the cleaning position.

The controller 50 may, on the basis of an instruction from the display and input part 30, control the transport part 10 to move the test strip holder 11 for which dirt has been detected, to the cleaning position. For example, the controller 50 may perform the dirt detection on each test strip holder 11 during a measurement of a sample 110, and on the basis of an instruction by the operator, provides information regarding the detected dirt on the test strip holder 11, and cause the test strip holder 11 to be moved to the cleaning position. Under control by the controller 50, for example, the transport part 10 transports the test strip holder 11 for which dirt has been detected, on the basis of operation performed on the display and input part 30. In this case, the operator can cause test strip holder 11 for which dirt has been detected, to be moved to the cleaning position at an arbitrary timing such as at the end of the measurement or at the time of shut down.

Further, the controller 50 may cause the cleaned test strip holder 11 to be moved from the cleaning position to the imaging position P3, cause the cleaned test strip holder 11 to be imaged again, and perform the dirt detection of the test strip holder 11 again. In this case, since the cleaned state can be confirmed through image analysis of the test strip holder 11, more reliable cleaning can be performed. That is, under control by the controller 50, the transport part 10 transports the test strip holder 11 for which dirt has been detected, to the cleaning position, and then, transports the cleaned test strip holder 11 to the imaging position P3. Under control by the controller 50, the imaging part 20 images the cleaned test strip holder 11.

The stop time of the test strip holder 11 at the cleaning position may be a constant time determined in advance, but preferably, can be arbitrarily changed by the operator since the time necessary for cleaning is different depending on the degree, etc., of the dirt on the test strip holder 11. In the present embodiment, when the operator has pressed a cleaning completion button 377 described later (see FIG. 19D), the next test strip holder 11 is transported to the cleaning position, and the cleaned test strip holder 11 is transported toward the imaging position P3. That is, the controller 50 causes the test strip holder 11 to stand by at the cleaning position until an instruction from the display and input part 30 is received. In this case, the operator can arbitrarily determine the cleaning time.

The controller 50 causes the display and input part 30 to display information regarding the detected dirt on the test strip holder 11. Accordingly, the operator can easily recognize that the test strip holder 11 is dirty, from the information displayed on the display and input part 30. When dirt on the test strip holder 11 has been detected, the controller 50 may cause, as necessary, the display and input part 30 to display the information regarding the same, or after performing the dirt detection on all of the test strip holders 11, the controller 50 may cause the information regarding the same to be collectively displayed. The controller 50 may cause the display and input part 30 to display information regarding the dirt on the test strip holder 11, on the basis of an instruction from the display and input part 30.

Further, preferably, the controller 50 causes the display and input part 30 to display at least one selected from the location where the dirt of the test strip holder 11 is present and the degree of the dirt. The controller 50 provides information regarding which test strip holder 11 is dirty, and in which portion of the test strip holder 11 the dirt is present. Accordingly, the operator can easily recognize the portion to be cleaned, and usability is further improved.

The controller 50 detects dirt on the basis of the difference between the pixel value in the image of the test strip holder 11 and the pixel value in the standard image of a test strip holder 11 in a state where dirt is not present. The pixel value is the value of light intensity detected by each pixel of the imaging element 22, and is stored as a gray level that takes a value of 0 to 255, for example. In the present embodiment, as the gray level, an RGB value indicating the light intensity of each of red, green, and blue, as a value of 0 to 255, is used.

Since the test strip holder 11 is black, each RGB value (hereinafter, referred to as "standard RGB value") of the standard image is a value that is close to 0, and an example thereof is 0 to 50. As for the dirt that attaches to the test strip holder 11, urine dirt is yellow and calcium hypochlorite dirt is white, for example. Therefore, the RGB value due to reflection light from the portion having dirt attached thereto becomes larger than the standard RGB value. When the difference between the RGB value (hereinafter, referred to as "target RGB value") in the image of the test strip holder 11 serving as the dirt detection target, and the standard RGB value is a large value and exceeds a predetermined border condition, it is possible to infer that dirt is present at the portion corresponding to the target RGB value.

Determination as to the presence or absence of dirt by image analysis of the test strip holder 11 is preferably performed by sectioning the placement face into a plurality of determination regions 120, and comparing the RGB value with the standard RGB value for each determination region 120. Each determination region 120 is set as a region that includes a plurality of pixels. The sizes of the determination regions 120 need not be the same with each other, and may be different depending on the position in the placement face. Determination as to the presence or absence of dirt may be performed for each pixel, or may be performed for the entirety of the placement face. However, if the presence or absence of dirt is determined for each determination region 120 including a plurality of pixels, false detection of dirt can be inhibited, and the location where the dirt is present can be displayed.

The controller 50 calculates the average value of the target RGB values in each determination region 120, and obtains a difference α from the standard RGB value by using this average value. Then, when the proportion of the difference α relative to the standard RGB value exceeds a predetermined threshold β, it is determined that dirt is present in the determination region 120 where α>β. An example of the threshold β is 50%. Alternatively, the difference α and a predetermined threshold γ are compared with each other, and when the difference α exceeds the threshold γ, it may be determined that dirt is present in the determination region 120 where α>γ.

When the determination region 120 for which dirt has been determined to be present is included in the image of the test strip holder 11 serving as the dirt detection target, the controller 50 stores the test strip holder 11 as a cleaning-requiring holder, into the storage 52. In addition, the controller 50 stores the position of the determination region 120 for which dirt has been determined to be present, as the location where dirt is present. Further, the controller 50 may obtain the degree of dirt by comparing the above difference α with a plurality of thresholds. As a specific example, when the difference α exceeds a second threshold larger than the threshold β, it is determined that the degree of dirt is higher than when the difference α is equal to or less than the second threshold. In this case, a numerical value indicating the degree of dirt, e.g., a dirt level 2 for the former and a dirt level 1 for the latter, is stored.

FIGS. 19A to 19D show examples of cleaning modes for the test strip holder 11 and display screens for displaying information regarding dirt on the test strip holder 11. FIG. 19A shows a maintenance screen 37a for performing maintenance of the sample analyzer 1. In the maintenance screen 37a, as one of maintenance items, a holder cleaning button 370 for performing cleaning of the test strip holder 11 is displayed. When the holder cleaning button 370 is pressed, the screen of the display and input part 30 is switched to the cleaning mode selection screen 37b shown in FIG. 19B.

As shown in FIG. 19B, an automatic detection cleaning selection button 371, a manual cleaning selection button 372, and a continuous cleaning selection button 373 are displayed in the cleaning mode selection screen 37b. The automatic detection cleaning mode to be executed upon pressing of the automatic detection cleaning selection button 371 is a mode in which dirt is automatically detected through image analysis of the test strip holder 11 and is executable also during a measurement of the sample 110, as described above. Information regarding dirt on the test strip holder 11 as shown in FIG. 19D can be displayed at an arbitrary timing on the basis of an instruction from the display and input part 30. When the dirt detection of the test strip holder 11 is performed during a measurement of the sample 110, the result thereof is stored and the information regarding the dirt is displayed after the measurement of the sample 110 has ended.

FIG. 19C and FIG. 19D respectively show a progress information screen 37c and a detection result screen 37d. When the automatic detection cleaning mode is executed when the measurement of the sample 110 is not performed, the screen of the display and input part 30 is switched to the progress information screen 37c. In the progress information screen 37c, information indicating that the dirt detection of each test strip holder 11 is being executed is displayed. When the dirt detection process has been completed with respect to all of the test strip holders 11, the screen of the display and input part 30 is switched to the detection result screen 37d. When cleaning of the test strip holder 11 is performed after the end of the measurement or at the time of shut down, if the dirt detection of the test strip holder 11 is performed during a measurement of the sample 110, the waiting time for the dirt detection can be shortened.

As shown in FIG. 19D, a holder image 375, a dirt location label 376, and the cleaning completion button 377 are displayed in the detection result screen 37d. By causing the holder image 375 to be displayed, it is possible to confirm, in the display and input part 30, the degree of dirt on the test strip holder 11. In the detection result screen 37d, at least one selected from a character, a digit, and a mark representing the degree of dirt may be displayed. The dirt location label 376 is information for displaying the portion where dirt has been detected, and preferably is displayed so as to overlap the holder image 375.

In the example shown in FIG. 19D, a plurality of the dirt location labels 376 having a quadrangular frame shape are displayed so as to each surround the dirt in the holder image 375. The shape of the dirt location label 376 is not limited to the quadrangular frame shape, and may be changed in accordance with the degree, the shape, the size, and the like of the dirt. In addition, the color of the dirt location label 376 may be changed in accordance with the degree, the shape, the size, and the like of the dirt. In the detection result screen 37d, further, the number of the test strip holders 11 for which dirt has been detected is displayed. "1/7" in FIG. 19D means that dirt to be cleaned has been detected with respect to seven test strip holders 11, and the first result among them is displayed.

Preferably, the information in the detection result screen 37d corresponds to the information on the test strip holder 11 to be disposed at the cleaning position. The controller 50 causes the display and input part 30 to display, at the timing when the test strip holder 11 arrives at the cleaning position, the corresponding detection result screen 37d of the test strip holder 11. The operator can clean the test strip holder 11 on the basis of the information displayed in the detection result screen 37d, and upon completion of cleaning of the test strip holder 11, presses the cleaning completion button 377. When the cleaning completion button 377 has been pressed, the controller 50 controls the transport part 10 to move the next test strip holder 11 for which dirt has been detected, to the cleaning position, and to move the cleaned test strip holder 11 toward the imaging position P3.

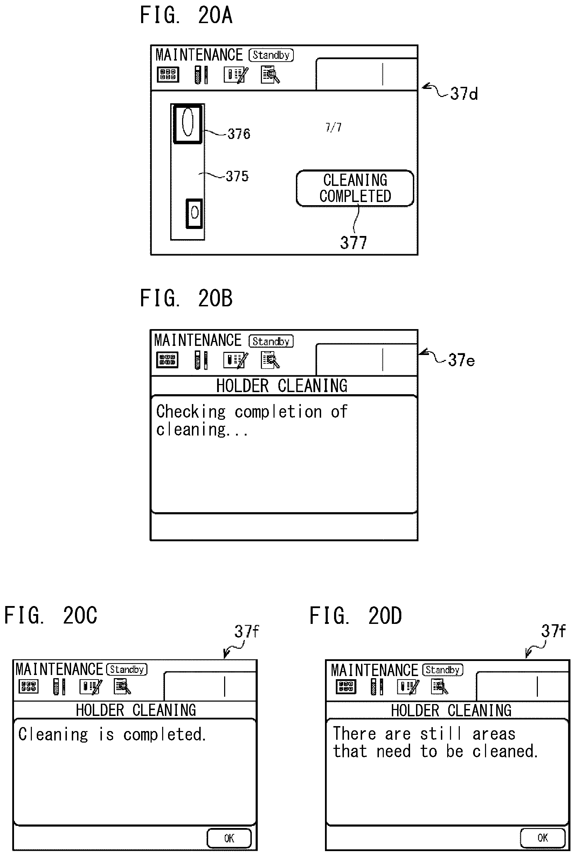

FIGS. 20A to 20D each show an example of a determination screen of the cleaned state of the test strip holder 11. FIG. 20A shows the detection result screen 37d of the seventh one of the seven test strip holders 11 for which dirt to be cleaned has been detected. When cleaning for the last test strip holder 11 has been completed, and the cleaning completion button 377 has been pressed, the screen of the display and input part 30 is switched to a progress information screen 37e shown in FIG. 20B. In the present embodiment, the cleaned test strip holder 11 is transported to the imaging position P3, the cleaned test strip holder 11 is imaged again, and the dirt detection of the test strip holder 11 is performed again. Therefore, when the last test strip holder 11 is imaged and until an image analysis result is made, the progress information screen 37e is continued to be displayed. In the progress information screen 37e, information indicating that the cleaning completion check is being executed is displayed.

Upon completion of imaging of the test strip holder 11 and the above cleaning completion check through image analysis, i.e., a re-detection process of dirt on the test strip holder 11, the screen of the display and input part 30 is switched to a cleaning determination screen 37f. In the cleaning determination screen 37f, when dirt has not been detected on the cleaned test strip holder 11, information indicating the completion of the cleaning is displayed as shown in FIG. 20C. When an "OK" button in the cleaning determination screen 37f shown in FIG. 20C has been pressed, the screen of the display and input part 30 returns to the maintenance screen 37a.

Meanwhile, when dirt has been detected on the cleaned test strip holder 11, information indicating that dirt still remains is displayed in the cleaning determination screen 37f as shown in FIG. 20D. When an "OK" button is pressed in the cleaning determination screen 37f shown in FIG. 20D, the test strip holder 11 for which dirt has been detected due to insufficient cleaning is transported to the cleaning position, and the screen of the display and input part 30 is switched to the detection result screen 37d. In this case, the operator needs to confirm the information in the detection result screen 37d, and perform cleaning of the test strip holder 11 again.

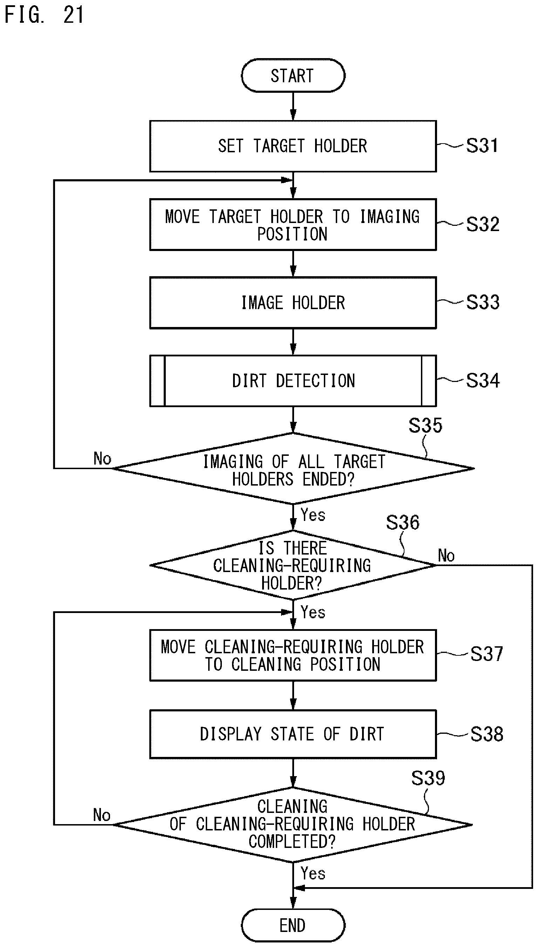

FIG. 21 is a flowchart showing an example of an automatic detection cleaning process for the test strip holder 11.

As shown in FIG. 21, in step S31, the controller 50 sets the test strip holder 11 serving as the dirt detection target. In the following, all of the test strip holders 11 are set as the dirt detection target. When the test strip holder 11 serving as the dirt detection target is selectable, a selection screen is displayed in the display and input part 30, for example. The controller 50 sets the test strip holder 11 serving as the dirt detection target, on the basis of an instruction from the display and input part 30.

In step S32, the controller 50 causes the test strip holder 11 serving as the dirt detection target to be moved to the imaging position P3. In the present embodiment, since all of the test strip holders 11 are the dirt detection target, the test strip holders 11 are sequentially transported to the imaging position P3. The controller 50 intermittently drives the drive device 13 of the transport part 10 under a prescribed condition, to transport each test strip holder 11 to the imaging position P3. The controller 50 recognizes which test strip holder 11 is at which position.

In step S33, the controller 50 controls the imaging part 20 to image the placement face of the test strip holder 11. For example, the controller 50 causes the imaging unit 20a to image the entirety of the placement face of the test strip holder 11, while causing the imaging unit 20a to move in the Y direction. In addition, the controller 50 performs image processing on the images acquired by the imaging element 22, extracts the range of one test strip holder 11, and combines a plurality of images to generate one holder image 375 (see FIG. 19D, etc.).

In step S34, the controller 50 analyzes the holder image 375 to perform the dirt detection process. For example, when the determination region 120 in which dirt is present is included in the holder image 375, the controller 50 stores the test strip holder 11 corresponding to the holder image 375 as a cleaning-requiring holder. In addition, the controller 50 stores the position of the determination region 120 as the location where the dirt is present.

In step S35, the controller 50 determines whether or not imaging of all of the test strip holders 11 has ended. When imaging of all of the test strip holders 11 has ended (Yes in step S35), the process is advanced to step S36. On the other hand, when imaging of all of the test strip holders 11 has not ended (No in step S35), the process is returned to step S32. When the automatic detection cleaning mode for the test strip holder 11 is executed during a measurement of the sample 110, steps S32 to S34 may be repeated throughout the measurement. In this case, when the measurement of the sample 110 has ended, the process is advanced to step S36.

In step S36, when information on the cleaning-requiring holder has been stored in step S34 (Yes in step S36), the controller 50 advances the process to step S37. On the other hand, when information on the cleaning-requiring holder has not been stored (No in step S36), the controller 50 causes the display and input part 30 to display information for notification of end of the automatic detection cleaning mode, skips steps S37 to S39, and ends the series of processes.

In step S37, the controller 50 causes the cleaning-requiring holder to be moved to the cleaning position. In the present embodiment, the placement position P1 for the test strip 100 serves as the cleaning position. The controller 50 drives the drive device 13 of the transport part 10 to transport the cleaning-requiring holder to the cleaning position.

In step S38, the controller 50 causes the display and input part 30 to display information regarding the dirt on the test strip holder 11. The controller 50 causes the detection result screen 37d including the holder image 375 and the dirt location label 376 to be displayed as the information regarding the dirt. The operator can clean the test strip holder 11 by using a paper towel or the like, while viewing the holder image 375 and the dirt location label 376 in the detection result screen 37d. Accordingly, cleaning of the test strip holder 11 can be quickly and appropriately performed. In the detection result screen 37d, the cleaning completion button 377 is displayed, and when the cleaning of the test strip holder 11 has been completed, the operator presses the cleaning completion button 377.

In step S39, the controller 50 determines whether or not cleaning of all of the test strip holders 11 for which dirt has been detected has been completed. Specifically, when operation signals of the cleaning completion button 377 has been acquired corresponding to the number of the cleaning-requiring holders, the controller 50 determines that cleaning of all of the test strip holders 11 has been completed (Yes in step S39), and ends the series of processes. Meanwhile, when the acquired number of operation signals of the cleaning completion button 377 is less than the number of the cleaning-requiring holders, there is an uncleaned test strip holder 11 present (No in step S39), and thus, the process is returned to step S37.

When the cleaning completion button 377 has been pressed, the controller 50 controls the transport part 10 to move the next test strip holder 11 for which cleaning is necessary, to the cleaning position, and causes the display and input part 30 to display information regarding the dirt on the test strip holder 11. The controller 50 may cause the cleaned test strip holder 11 to be moved to the imaging position P3, cause the cleaned test strip holder 11 to be imaged again, and perform the dirt detection of the test strip holder 11 again. In this case, through image analysis of the test strip holder 11, the cleaned state can be confirmed. When dirt is detected on the cleaned test strip holder 11, this test strip holder 11 is transported to the cleaning position again.

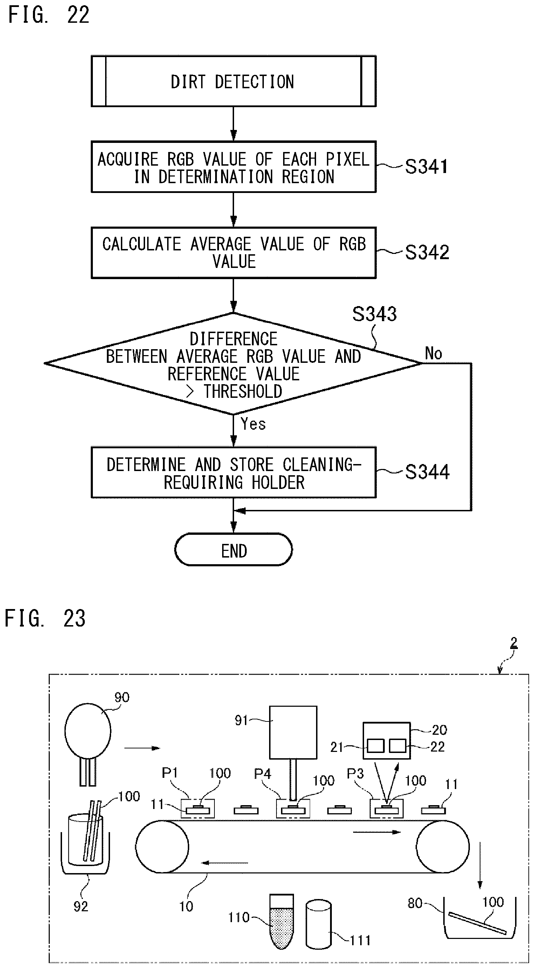

FIG. 22 is a flowchart showing an example of the dirt detection process for the test strip holder 11.

As shown in FIG. 22, in step S341, the controller 50 sections the holder image 375 captured in step S33 into a plurality of determination regions 120, and acquires the RGB value of each of pixels forming the image data, for each determination region 120. In the present embodiment, the entirety of the placement face is sectioned into a plurality of determination regions 120. The size of each determination region 120 is not particularly limited, but each determination region 120 includes a plurality of pixels.

In step S342, the controller 50 calculates the average value of the RGB values for each determination region 120, and compares, in step S343, the average value of the RGB values in each determination region 120 with the standard RGB value of the standard image of a test strip holder 11 in a state where no dirt is present. In step S343, it is determined whether or not the difference α between the average value of the RGB values in each determination region 120 and the standard RGB value exceeds the predetermined threshold γ. In step S343, it may be determined whether or not the proportion of the difference α relative to the standard RGB value exceeds the predetermined threshold β. It is also possible to perform dirt determination by comparing only the B value out of the RGB values in each determination region 120, with the B value of the standard RGB value.

When the difference α between the average value of the RGB values in each determination region 120 and the standard RGB value exceeds the threshold γ (Yes in step S343), the controller 50 determines, in step S344, that dirt is present in the determination region 120 where α>γ. Then, when the determination region 120 for which dirt has been determined to be present is included in the holder image 375 serving as the analysis target, the controller 50 stores the test strip holder 11 corresponding to the holder image 375 as a cleaning-requiring holder. In addition, the controller 50 stores the position of the determination region 120 for which dirt is determined to be present, as the location where dirt is present.

Meanwhile, when the determination region 120 where α>γ is not included in the holder image 375 (No in step S343), the controller 50 skips step S344 and ends the dirt detection process. That is, when the determination region 120 where α>γ is not included in the holder image 375, it is determined that dirt to be cleaned is not present on the test strip holder 11 corresponding to the holder image 375.

As described above, when an image of the test strip holder 11 is analyzed and dirt on the test strip holder 11 is automatically detected, appropriate cleaning of the test strip holder 11 can be effectively performed. The operator can execute the automatic detection cleaning mode at the time of start-up of the sample analyzer 1, at the time of shut down of the sample analyzer 1, between measurements of the samples 110, or during a measurement of the sample 110. When dirt to be cleaned has been detected through image analysis of the test strip holder 11, information including the location where dirt is present in the cleaning-requiring holder is displayed in the display and input part 30, and the cleaning-requiring holder is transported to the cleaning position. Therefore, while viewing the information displayed on the display and input part 30, the operator can quickly and properly clean the cleaning-requiring holder.

When a sample attaches to a test strip holder 11 and dirt is accumulated, influence on the analysis result or a hygiene problem may occur, for example. However, according to the sample analyzer 1, occurrence of such problems can be more reliably inhibited.

The above embodiment can be changed in design as appropriate in a range where the objective of the present disclosure is not impaired. For example, the sample analyzer 1 is configured to cause the display and input part 30 to display a plurality of test strip images 300 in parallel so as to allow comparison and reference. However, a sample analyzer as another example of the embodiment need not necessarily have the function of parallel display of a plurality of test strip images 300. The sample analyzer as another example of the embodiment may have a second imaging part for imaging the placement part 11, in addition to the imaging part 20. However, since the imaging part 20 is configured to be able to image the entirety of the placement part 11, it is preferable to perform the dirt detection for the placement part 11 by using the image acquired by the imaging part 20, from the viewpoint of downsizing of the apparatus, cost reduction, and the like.

The sample analyzer 1 is a semiautomatic apparatus in which a test strip 100 containing a sample 110 is prepared and placed on a test strip holder 11 by the operator. However, the configuration of the sample analyzer of the present disclosure can also be applied to a fully automatic apparatus as shown as an example in FIG. 23.

FIG. 23 shows a schematic configuration of a sample analyzer 2 as another example of the embodiment. The sample analyzer 2 is a fully automatic apparatus in which placement of a test strip 100 onto a test strip holder 11, and spot-application of a sample 110 to the test strip 100 are automatically performed. The sample analyzer 2 shares, with the sample analyzer 1, the feature of having the transport part 10 including a plurality of test strip holders 11, the imaging part 20 including the light sources 21 and the imaging element 22, and the collection part 80.

On the other hand, the sample analyzer 2 is different from the sample analyzer 1 in the feature of having a robot arm 90 for placing a test strip 100 on a test strip holder 11, a dispensing device 91 for spot-applying a sample 110 on the test strip 100, and a storing part 92 for storing test strips 100. In the sample analyzer 2, for example, a urine collection tube containing a sample 110, and a washing agent container containing a washing agent 111 for washing the nozzle of the dispensing device 91 are placed.

In the sample analyzer 2, as in the case of the sample analyzer 1, a test strip 100 is placed on a test strip holder 11 at the placement position P1, and then, the test strip holder 11 is transported to the imaging position P3, the test strip 100 is imaged, and analysis of the sample 110 is performed through image analysis of the test strip 100. In the sample analyzer 2, the test strip 100 is not immersed in the sample 110, and the sample 110 is not attached to the test strip 100 at the placement position P1. The test strip 100 is placed by the robot arm 90 onto a test strip holder 11 in a state where the reagent pads 102 are oriented upward, and at a spot-application position P4, the dispensing device 91 drops the sample 110 onto the reagent pads 102 of the test strip 100.

In the sample analyzer 2 as well, when the sample 110 is spot-applied to the test strip 100, the sample 110 may attach to the test strip holder 11, whereby the test strip holder 11 may become dirty. Therefore, installing the function of the automatic detection cleaning mode to the sample analyzer 2 is preferable for effectively performing appropriate cleaning of the test strip holder 11. In order to effectively grasp the cause of an abnormality when the abnormality has occurred in an analysis result, it is preferable to install the function of parallel display of a plurality of test strip images 300 to the sample analyzer 2.

### [Remarks]

The present disclosure includes following items 1-15.

Item 1: A sample analyzer configured to image a test strip and analyze an image of the test strip, to analyze a sample, the sample analyzer comprising:
a transport part having a placement part on which the test strip is placed, the transport part being configured to move the placement part to an imaging position for the test strip;
a controller configured to analyze the image of the test strip obtained through imaging; and
an imaging part configured to be able to image the placement part, wherein
the controller analyzes an image of the placement part obtained through imaging, to detect dirt on the placement part.

Item 2: The sample analyzer of item 1, further comprising
a display part, wherein
the controller causes the display part to display information regarding the dirt, on the placement part, having been detected.

Item 3: The sample analyzer of item 2, wherein
the controller causes the display part to display at least one selected from a location where the dirt on the placement part is present, and a degree of the dirt.

Item 4: The sample analyzer of item 1, wherein
the transport part moves the placement part for which dirt has been detected, to a cleaning position.

Item 5: The sample analyzer of item 4, wherein
the transport part transports the placement part having been cleaned, from the cleaning position to the imaging position,
the imaging part images the placement part having been cleaned, and
the controller analyzes an image of the placement part having been cleaned, to detect dirt on the placement part.

Item 6: The sample analyzer of item 1, wherein
the controller detects dirt on the basis of a difference between a pixel value in the image of the placement part and a pixel value in a standard image of the placement part in a state where dirt is not present.

Item 7: The sample analyzer of item 1, further comprising
an input part configured to receive an input of a predetermined instruction, wherein
the controller controls, on the basis of an instruction from the input part, the transport part to move the placement part for which dirt has been detected, to a cleaning position.

Item 8: The sample analyzer of item 1, wherein
the transport part is provided with a plurality of the placement parts.

Item 9: The sample analyzer of item 1, wherein
the imaging part images the placement part not having the test strip placed thereon, and
the controller analyzes an image of the placement part not having the test strip placed thereon, to detect dirt on the placement part.

Item 10: The sample analyzer of item 1, wherein
the imaging part images the placement part having the test strip placed thereon, and
the controller extracts a region of the placement part from an image of the placement part having the test strip placed thereon and analyzes the region, to detect dirt on the placement part.

Item 11: The sample analyzer of item 1, wherein
a series of processes for detecting dirt on the placement part is executed during a measurement of the sample.

Item 12: The sample analyzer of item 1, wherein
a series of processes for detecting dirt on the placement part is executed at a time of start-up or at a time of shut down of the sample analyzer.

Item 13: The sample analyzer of any one of items 1 to 12, wherein
the placement part is configured such that the test strip is placed thereon by an operator.

Item 14: The sample analyzer of any one of items 1 to 12, wherein
the test strip includes a plurality of types of reagent pads that are impregnated with a sample by an operator.

Item 15:A method, performed in a sample analyzer including an imaging part and a placement part on which a test strip is placed, for determining dirt on the placement part,
the method comprising:
imaging the placement part; and
analyzing an image, of the placement part, obtained through imaging, to detect dirt on the placement part.

### DESCRIPTION OF THE REFERENCE CHARACTERS

1, 2 sample analyzer
10 transport part
11 test strip holder
11a accommodation part
11b bottom plate
11c side wall
11d extension
11e projection
12 transport mechanism
12a endless belt
12b, 12c pulley
13, 25 drive device
20 imaging part
20a imaging unit
21 light source
22 imaging element
23 support body
24 guide rail
30 display and input part
31a, 31b result list screen
32 measurement screen
33a to 33e selection screen
34 enlargement display screen
35 error display screen
36 result detail screen
37a maintenance screen
37b cleaning mode selection screen
37c, 37e progress information screen
37d detection result screen
37f cleaning determination screen
40 test strip detection part
50 controller
51 calculation part
52 storage
55 board
60 printing part
70 housing
70a upper cover
70b lower cover
70c front cover
71, 72, 73 opening
75 drawer part
76 tray
77 recess
78 lock lever
80 collection part
90 robot arm
91 dispensing device
92 storing part
100 test strip
101 base
102 reagent pad
103 identification indication
104 grip part
110 sample
111 wiping paper
120 determination region
300 test strip image
310 list
311a, 311b screen switching button
312 display condition switching button
313 selection button
314 scroll button
315 result detail display button
316 narrowing setting button
317 search button
318 information sharing button
320 indicator
321 list
322 measurement button
330 narrowed display selection button
331 first selection button
332 second selection button
333 third selection button
334 fourth selection button
335 fifth selection button
336 sixth selection button
337b, 337d type selection button
338b, 338d lot number selection button
340 motion button
341 return button
360 list
361 first label
362, 362a, 362b, 362c second label
370 holder cleaning button
371 automatic detection cleaning selection button
372 manual cleaning selection button
373 continuous cleaning selection button
375 holder image
376 dirt location label
377 cleaning completion button

## Claims

1. A sample analyzer configured to image a test strip and analyze an image of the test strip, to analyze a sample, the sample analyzer comprising:
a transport part having a placement part on which the test strip is placed, the transport part being configured to move the placement part to an imaging position for the test strip;
a controller configured to analyze the image of the test strip obtained through imaging; and
an imaging part configured to be able to image the placement part, wherein
the controller analyzes an image of the placement part obtained through imaging, to detect dirt on the placement part.

2. The sample analyzer of claim 1, further comprising
a display part, wherein
the controller causes the display part to display information regarding the dirt, on the placement part, having been detected.

3. The sample analyzer of claim 2, wherein
the controller causes the display part to display at least one selected from a location where the dirt on the placement part is present, and a degree of the dirt.

4. The sample analyzer of claim 1, wherein
the transport part moves the placement part for which dirt has been detected, to a cleaning position.

5. The sample analyzer of claim 4, wherein
the transport part transports the placement part having been cleaned, from the cleaning position to the imaging position,
the imaging part images the placement part having been cleaned, and
the controller analyzes an image of the placement part having been cleaned, to detect dirt on the placement part.

6. The sample analyzer of claim 1, wherein
the controller detects dirt on the basis of a difference between a pixel value in the image of the placement part and a pixel value in a standard image of the placement part in a state where dirt is not present.

7. The sample analyzer of claim 1, further comprising
an input part configured to receive an input of a predetermined instruction, wherein
the controller controls, on the basis of an instruction from the input part, the transport part to move the placement part for which dirt has been detected, to a cleaning position.

8. The sample analyzer of claim 1, wherein
the transport part is provided with a plurality of the placement parts.

9. The sample analyzer of claim 1, wherein
the imaging part images the placement part not having the test strip placed thereon, and
the controller analyzes an image of the placement part not having the test strip placed thereon, to detect dirt on the placement part.

10. The sample analyzer of claim 1, wherein
the imaging part images the placement part having the test strip placed thereon, and
the controller extracts a region of the placement part from an image of the placement part having the test strip placed thereon and analyzes the region, to detect dirt on the placement part.

11. The sample analyzer of claim 1, wherein
a series of processes for detecting dirt on the placement part is executed during a measurement of the sample.

12. The sample analyzer of claim 1, wherein
a series of processes for detecting dirt on the placement part is executed at a time of start-up or at a time of shut down of the sample analyzer.

13. The sample analyzer of any one of claims 1 to 12, wherein
the placement part is configured such that the test strip is placed thereon by an operator.

14. The sample analyzer of any one of claims 1 to 12, wherein
the test strip includes a plurality of types of reagent pads that are impregnated with a sample by an operator.

15. A method, performed in a sample analyzer including an imaging part and a placement part on which a test strip is placed, for determining dirt on the placement part,
the method comprising:
imaging the placement part; and
analyzing an image, of the placement part, obtained through imaging, to detect dirt on the placement part.
